# EUROPEAN PATENT APPLICATION

(11) **EP 2 072 985 A1**
(43) Date of publication of application: **24.06.2009**
(21) Application number: 07829455.0
(22) Date of filing: 10.10.2007
(51) Int. Cl.: G01L 3/10, B62D 5/04

(54) **TORQUE DETECTOR, METHOD OF PRODUCING THE TORQUE DETECTOR, AND ELECTRIC POWER STEERING DEVICE**

(30) Priority: 12.10.2006 JP 2006279055; 21.12.2006 JP 2006344988
(71) Applicant: NSK Limited, Shinagawa-ku Tokyo 141-8560 (JP)
(72) Inventor: SAKATANI, Ikunori, Fujisawa-shi Kanagawa 251-8501 (JP); HORIKOSHI, Atsushi, Fujisawa-shi Kanagawa 251-8501 (JP); ASAKA, Atsuyoshi, Fujisawa-shi Kanagawa 251-8501 (JP); KAWAI, Yasuhiro, Fujisawa-shi Kanagawa 251-8501 (JP); OTA, Yusuke, Fujisawa-shi Kanagawa 251-8501 (JP)
(74) Representative: HOFFMANN EITLE
(86) International application number: PCT/JP2007/069717
(87) International publication number: WO 2008/044689

(57) **Abstract**

A torque detector capable of achieving reduced size, a method of producing the same and an electric power steering device are provided. The torque detector has: a first shaft body and a second shaft body; a connecting shaft for connecting them; a permanent magnet fixed to the first shaft body; a plurality of magnetic bodies and auxiliary magnetic bodies, fixed to the second shaft body and arranged within the magnetic field of the permanent magnet, for forming the magnetic circuit of the permanent magnet; and a magnetic flux detector for detecting magnetic flux by induction of the magnetic bodies and the auxiliary magnetic bodies, and detects torque based on a detection output of the magnetic flux detector when the torque has acted on the first shaft body or the second shaft body, wherein the permanent magnet is formed into the shape of a flat annular body surrounding the connecting shaft or the first shaft body, and has different magnetic poles alternately magnetized in the axial direction, and opposes the magnetic bodies and the auxiliary magnetic bodies in the axial direction of the first shaft body.

## Description

### BACKGROUND

The present invention relates to a torque detector, a production method thereof and an electric power steering (EPS) device, and is preferably applied to, for example, an automobile electric power steering device.

Examples of torque detectors (torque sensors) known in the prior art include those disclosed in Patent Documents 1 to 5.

For example, the torque detector disclosed in Patent Document 1 has a pair of ring-shaped sensor members provided so as to oppose a circumferential side of a ring-shaped permanent magnet magnetized in multiple poles along a circumferential direction, and detects torque generated on the side of the permanent magnet or side of the sensor members based on magnetic flux detected by a magnetic flux detector (magnetic sensor) arranged between these sensor members.

In addition, Patent Document 5 discloses a configuration of the torque detector disclosed in Patent Document 1, wherein together with measuring a voltage change in the form of a deflection angle from an output result obtained by manipulating and amplifying output signals having respectively different polarities using two magnetic flux detectors consisting of a first magnetic flux detector and a second magnetic flux detector, an abnormal status of the first magnetic flux detector and the second magnetic flux detector can be detected by detecting an abnormality in the voltage change.
Patent Document 1: Japanese Patent Application Laid-open No. H2-162211
Patent Document 2: Japanese Patent Application Laid-open No. H3-48714
Patent Document 3: Japanese Patent Application Laid-open No. H2-93321
Patent Document 4: Japanese Patent Application Laid-open No. 2003-149062
Patent Document 5: Japanese Patent Application Laid-open No. H2-141616
Patent Document 6: Japanese Patent Application Laid-open No. 2006-64577

However, in the torque detectors disclosed in Patent Document 1 and Patent Document 5, in order to detect torque based on an output from a magnetic flux detector, it is necessary for the sensor members to receive at least a fixed amount of magnetic flux generated by the permanent magnet, and consequently, it was necessary to increase the surface area over which the sensor members and permanent magnet are opposed.

Consequently, in the torque detectors employing the configuration disclosed in Patent Document 1 and Patent Document 5, the sensor members and the permanent magnet were forced to be configured lengthwise in the axial direction over a long distance, and as a result thereof, the torque detector itself, and in turn an electric power steering device provided with the torque detector, had the problem of being difficult to reduce in size.

One technique for solving this problem is disclosed in Patent Document 6 in the form of a torque detector in which a permanent magnet is configured with a conical multipole magnet.

However, in the torque detector disclosed in Patent Document 6, although the shape of the magnet has been made to be conical, simply making the shape of the magnet conical is not sufficient for shortening the dimension in the axial direction. Moreover, since the magnet is conical, processing and magnetization become difficult thereby resulting in the problem of increased costs.

### SUMMARY

With the foregoing in view, the present invention proposes a torque detector enabling the size of the configuration thereof to be reduced, a production method thereof, and an electric power steering device.

In order to solve the problems as described above, the present invention provides a torque detector, which is provided with a first shaft body; a second shaft body; a connecting shaft for connecting the first shaft body and the second shaft body, a permanent magnet fixed to the first shaft body; a plurality of magnetic bodies and auxiliary magnetic bodies, fixed to the second shaft body and arranged within the magnetic field of the permanent magnet, for forming the magnetic circuit of the permanent magnet that are fixed to the second shaft body and arranged within the magnetic field of the permanent magnet; and a magnetic flux detector for detecting magnetic flux by induction of the magnetic bodies and the auxiliary magnetic bodies, and which detects torque based on a detection output of the magnetic flux detector when the torque has acted on the first shaft body or the second shaft body; wherein the permanent magnet is formed into the shape of a flat annular body surrounding the connecting shaft or the first shaft body, and has different magnetic poles alternately magnetized in the axial direction, and opposes the magnetic bodies and the auxiliary magnetic bodies in the axial direction of the first shaft body.

In addition, the present invention provides a torque detector, which is provided with a first shaft body; a second shaft body; a connecting shaft for connecting the first shaft body and the second shaft body; a permanent magnet fixed to the first shaft body; a plurality of magnetic bodies, fixed to the second shaft body and arranged within the magnetic field of the permanent magnet, for forming the magnetic circuit of the permanent magnet; a plurality of auxiliary magnetic bodies arranged in proximity to the plurality of magnetic bodies; and a magnetic flux detector for detecting magnetic flux by induction of the magnetic bodies and the auxiliary magnetic bodies, and which detects torque based on a detection output of the magnetic flux detector when the torque has acted on the first shaft body or the second shaft body, wherein the permanent magnet is formed into the shape of a flat annular body surrounding the connecting shaft or the first shaft body, and has different magnetic poles alternately magnetized in the axial direction, and opposes the magnetic bodies in the axial direction of the first shaft body.

In this torque detector, together with the permanent magnet being formed into the shape of a flat annular body, since different magnetic poles thereof are alternately magnetized in the axial direction in the annular body, and the permanent magnet is arranged facing the magnetic bodies and the auxiliary magnetic bodies in the axial direction of the first shaft body, the length of a device in the axial direction can be shortened, thereby making it possible to contribute to reduced size and cost of the device.

When configuring the torque detector, a configuration is employed in which a plurality of magnetic bodies are formed into an annular shape, and arranged in one of regions on both sides centering about the permanent magnet, and face the permanent magnet. The plurality of auxiliary magnetic bodies are formed into an annular shape, are magnetically coupled to the plurality of magnetic bodies, and respectively induce magnetic flux from the magnetic bodies, and have a magnetic flux concentrating portion for collecting the induced magnetic flux, while the magnetic flux detector detects magnetic flux that has collected in the magnetic flux concentrating portion. In addition, the plurality of auxiliary magnetic bodies are arranged in one of regions on both sides of the plurality of magnetic bodies in the axial direction so as to face the plurality of magnetic bodies, or the magnetic flux concentrating portion of the plurality of auxiliary magnetic bodies can be formed to match the size of the magnetic flux detector.

In addition, the present invention provides a first shaft and a second shaft coaxially connected through a connecting shaft, a ring-shaped permanent magnet fixed to the second shaft and magnetized in multiple poles along a circumferential direction, a sensor yoke fixed to the first shaft for forming a magnetic circuit together with the permanent magnet, a magnetism collecting yoke, arranged on the opposite side in the axial direction of the sensor yoke to the side of the sensor yoke, for forming the magnetic circuit together with the permanent magnet and the sensor yoke, and a magnetic flux detector for detecting magnetic flux induced by the sensor yoke and the magnetism collecting yoke, and which detects torque applied to either one of the first shaft and the second shaft based on the output of the magnetic flux detector; wherein, the yoke sensor is formed into the shape of a flat plate and arranged so as to face one side of the permanent magnet in the axial direction. According to this configuration, since the yoke sensor is a flat plate and arranged in a row with the permanent magnet in the axial direction, the length of the entire torque detector in the axial direction can be shortened.

In addition, in the present invention, the magnetism collecting yoke is arranged so as to continuously oppose the sensor yoke over the entire circumferential direction. According to this configuration, error attributable to fluctuations in the relative angle between the sensor yoke and magnetism collecting yoke can be eliminated.

Moreover, in the present invention, the magnetism collecting yoke is provided with a magnetic flux concentrating portion to concentrate magnetic flux passing through the magnetism collecting yoke. As a result of providing a magnetic flux concentrating portion in this manner, magnetic flux is concentrated and thereby more easily detected by the magnetic flux detector, in addition, the magnetic flux detector can be fixed with the magnetic flux concentrating portion, thereby facilitating installation of the magnetic flux detector.

Moreover, in the present invention, the sensor yoke is composed of a pair of first and second sensor yoke constituent members, and the first and second sensor yoke constituent members are arranged in the same or substantially the same plane. As a result thereof, the amount of molding material can be reduced when integrating these constituent members with a resin or other molding material.

Moreover, in the present invention, the thicknesses of the first and second sensor yoke constituent members are the same or substantially the same. As a result thereof, the first and second sensor yoke constituent members can be processed with a single iron plate during press forming, thereby making it possible to reduce processing costs.

Moreover, in the present invention, the first and second sensor yoke constituent members are in the shape of rings having mutually different diameters, one or a plurality of protrusions are provided respectively protruding in the radial direction on the side on which one of the second and first sensor yoke constituent members is present, and the number of the protrusions provided on the first or second sensor yoke constituent member is made to be half the number of poles of the permanent magnet. As a result thereof, magnetic flux generated from the permanent magnet can be used effectively.

Moreover, in the present invention, two of the magnetic flux detectors are provided. As a result thereof, sensitivity can be doubled by using a difference in the outputs thereof, thereby making it possible to cancel out zero point drift. In addition, a duplex system can be configured for sensor signals, thereby making it possible to improve reliability.

Moreover, in the present invention, three or more magnetic flux detectors are provided. As a result thereof, even if one of the magnetic flux detectors malfunctions, highly reliable data can be obtained from the remaining two or more normal magnetic flux detectors.

Moreover, by incorporating these torque detectors in an electric power steering device, the length of the overall electric power steering device in the axial direction can be shortened, and the installation of an electric power steering device can be facilitated in cases when installation space is limited.

According to the present invention, length in the axial direction can be shortened, thereby making it possible to correspondingly reduce the size of the torque detector and electric power steering device.

### DESCRIPTION OF THE DRAWINGS

FIG. 1 is an end view schematically showing the approximate configuration of a torque detector according to a first embodiment;
FIG. 2 is an exploded perspective view of the torque detector of FIG. 1;
FIG. 3 is an overhead cross-sectional perspective view of the essential portions of the torque detector of FIG. 1;
FIG. 4 is a bottom cross-sectional perspective view of the essential portions of the torque detector of FIG. 1;
FIG. 5 is a cross-sectional perspective view showing the essential portions of the configuration of a magnetic body and a permanent magnet;
FIG. 6 is a cross-sectional perspective view showing the essential portions of an auxiliary magnetic body;
FIG. 7 is a plan view for explaining the operation of a torque detector in the absence of a torque input;
FIG. 8 is a side view for explaining the flow of magnetic flux in the absence of a torque input;
FIG. 9 is an end view schematically showing another configuration of a torque detector according to a first embodiment;
FIG. 10 is an end view schematically showing the configuration of a torque detector according to a second embodiment;
FIG. 11A is a perspective view showing the essential portions of the detailed configuration of the torque detector of FIG. 10, and FIG. 11B is an exploded perspective view of the essential portions;
FIG. 12 is a schematic drawing of a magnetic circuit for explaining the operation of the torque detector of FIG. 10;
FIG. 13 is an end view schematically showing another configuration of a torque detector according to a first embodiment;
FIG. 14 is an exploded perspective view showing another example of the configuration of a torque detector according to a second embodiment;
FIG. 15 is a perspective view showing the essential portions of another example of the configuration of the torque detector of FIG. 14;
FIG. 16 is an exploded perspective view showing another example of the configuration of a torque detector according to a second embodiment;
FIG. 17 is a perspective view showing the essential portions of another example of the configuration of the torque detector of FIG. 16;
FIG. 18A is a block diagram for explaining a control unit of a torque detector according to a second embodiment, and FIG. 18B is a side view of the essential portions of this torque detector;
FIG. 19 is a block diagram showing the configuration of a control unit in the form of a comparative example of FIG. 18;
FIG. 20 is a graph showing output characteristics of a magnetic detection element having a sensor yoke and magnetic collecting yoke made of structural steel;
FIG. 21 is a graph showing output characteristics when using an alloy containing about 45% by weight of nickel for a sensor yoke and magnetism collecting yoke;
FIG. 22 is a graph showing output characteristics when using an alloy containing about 75% by weight of nickel for a sensor yoke and magnetic collecting yoke;
FIG. 23 is a graph showing the relationship between nickel content, price and hysteresis;
FIG. 24A is a perspective view showing the essential portions of the detailed structure of a torque detector according to a third embodiment, and FIG. 24B is an exploded perspective view showing the essential portions;
FIG. 25A to FIG. 25C are schematic drawings for explaining the production method of a sensor yoke of the torque detector of FIG. 24;
FIG. 26 is a schematic drawing showing another example of the configuration of a torque detector according to a third embodiment;
FIG. 27 is an exploded perspective view showing another example of the configuration of a torque detector according to a third embodiment;
FIG. 28 is an end view schematically showing the configuration of a torque detector according to a fourth embodiment;
FIG. 29 is a perspective view showing the essential portions of the detailed structure of the torque detector of FIG. 28;
FIG. 30 is a perspective view depicting the torque detector of FIG. 28 after molding;
FIG. 31 is a perspective of the back of the torque detector of FIG. 28;
FIG. 32 is an exploded perspective view of the torque detector of FIG. 28;
FIG. 33 is a plan view for explaining a method of producing a claw pole provided in the torque detector of FIG. 28;
FIG. 34 is an exploded perspective view schematically showing another configuration of a torque detector according to a fourth embodiment;
FIG. 35 is an exploded perspective view schematically showing another configuration of a torque detector according to a fourth embodiment;
FIG. 36 is an end view schematically showing the configuration of a torque detector according to a fifth embodiment;
FIG. 37 is a perspective view showing the essential portions of the detailed configuration of the torque detector of FIG. 36;
FIG. 38 is an exploded perspective view showing the detailed configuration of the torque detector of FIG. 36;
FIG. 39 is a plan view explaining of the essential portions for explaining a method of producing first and second magnetism collecting yoke units of the torque detector of FIG. 36;
FIG. 40 is a perspective view of the essential portions for explaining another example of the configuration of a torque detector according to a fifth embodiment;
FIG. 41 is a perspective view showing the essential portions of another example of the configuration of a torque detector according to a fifth embodiment;
FIG. 42 is an exploded perspective view showing the configuration of the torque detector of FIG. 41;
FIG. 43 is a cross-sectional view showing the periphery of a torque detector in an EPS system;
FIG. 44 is a perspective view showing the configuration of a sensor yoke assembly in the EPS system of FIG. 43;
FIG. 45 is a perspective view showing the configuration of a magnetism collecting yoke in the EPS system of FIG. 43;
FIG. 46 is a perspective view showing the configuration of a magnetism collecting yoke assembly in the EPS system of FIG. 43; and
FIG. 47 is a perspective view showing the configuration of a magnet assembly in the EPS system of FIG. 43.

10,55,70,85,95,110,120,130,132,140,170: torque detector, 12,52: first shaft body, 14,51: torsion bar, 16,53: second shaft body, 18,57,73: back yoke, 20,56: permanent magnet, 22,55A,80A,90A,111A,121A,133: first sensor yoke unit, 24,55B,80B,90B,111B,121B,131: second sensor yoke unit, 26,28,82,83,121AX, 121BX: claw pole, 30,65A,81A,91A,141A,160A,171A: first magnetism collecting yoke unit, 32,65B,81B,91B,141B,160B,171B: second magnetism collecting yoke unit, 34,36,66A,66B,84A,84B,94A,94B,161B: magnetic flux concentrating portion constituent unit: 38,67,67A,67B: magnetic flux detector, 40,42,58,114: resin, 44: worm gear, 55,111,121: sensor yoke, 60,82,82,83,92,93,112,113,131A,133A: protrusion, 61,63,117: indentation, 65,141,160,171: magnetism collecting yoke, 72: worm wheel, 100: control unit, 102A,102B: power supply circuit, 115: gap, 116: connecting portion, 150: plate, 180: EPS system

### DETAILED DESCRIPTION

The following provides a detailed description of embodiments of the present invention with reference to the drawings.

### (1) First Embodiment

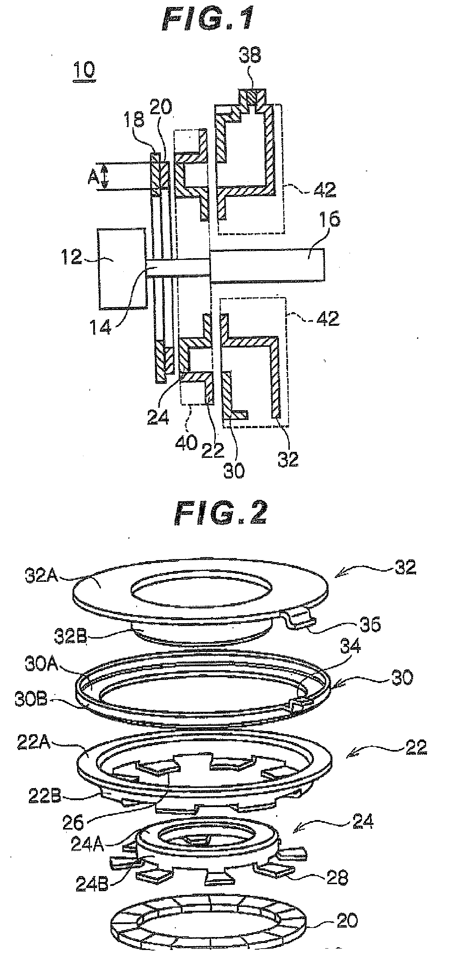

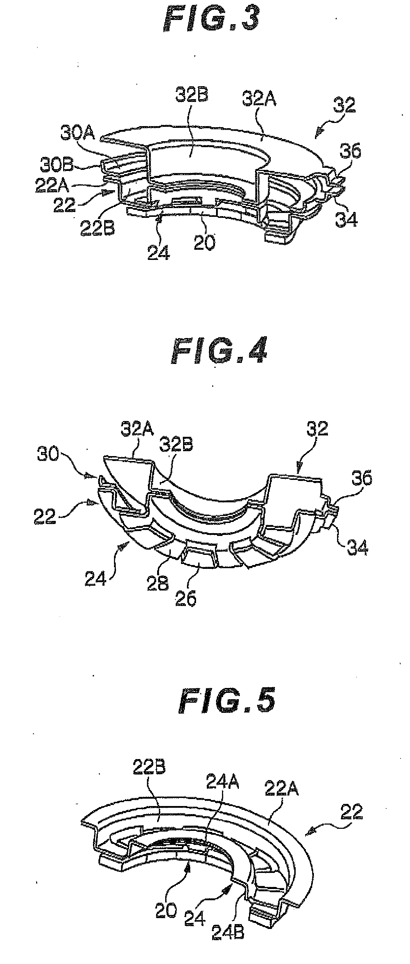

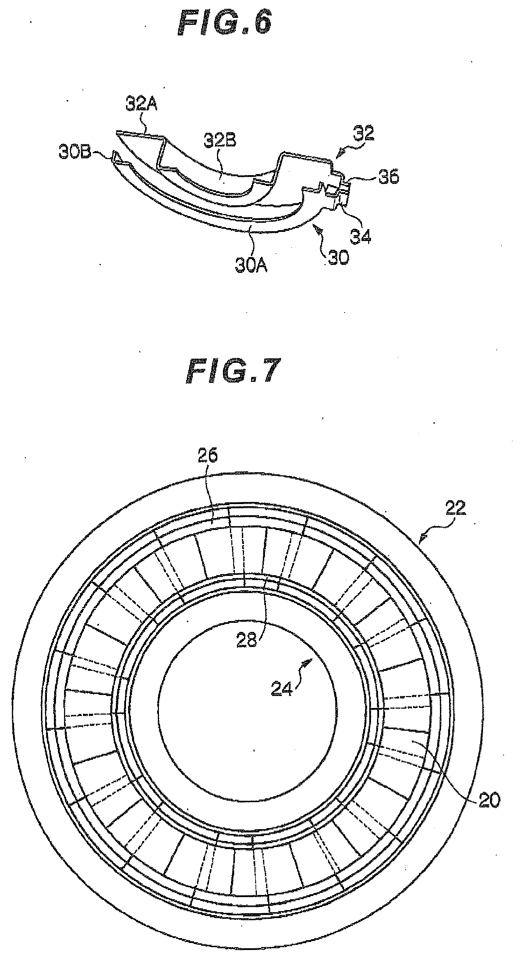

FIG. 1 is a cross-sectional view of a torque detector showing a first embodiment of the present invention, FIG. 2 is an exploded perspective view of the torque detector, FIG. 3 is a cross-sectional overhead perspective view of the essential portions of the torque detector, FIG. 4 is a cross-sectional bottom perspective view of the essential portions of the torque detector, FIG. 5 is a cross-sectional perspective view showing the essential portions of the configuration of a magnetic body and a permanent magnet, and FIG. 6 is a cross-sectional perspective view showing the essential portions of the configuration of an auxiliary magnetic body.

In FIGS. 1 to 6, a torque detector 10 is provided with a first shaft body 12 formed roughly into the shape of a cylinder, and one end in the axial direction of the first shaft body 12 is rotatably supported by a bearing (not shown). A steering wheel of an electric power steering (EPS) device (not shown) is connected to one end in the axial direction of the first shaft body 12, and a second shaft body 16 is connected to the other end in the axial direction via a connecting shaft (to be referred to as a torsion bar) 14. Both ends of the torsion bar 14 in the axial direction thereof are respectively connected to the first shaft body 12 and the second shaft body 16 in the form of a connecting member that connects the first shaft body 12 and the second shaft body 16. One end in the axial direction of the second shaft body 16 is rotatably supported by a bearing (not shown).

A back yoke 18, formed into the shape of a circular ring, and a permanent magnet 20, formed into the shape of a circular ring, are arranged around the torsion bar 14. The permanent magnet 20 is formed into a flat annular shape, is fixed either directly or indirectly to the first shaft body 12, and is composed in the form of a multipole magnet having in the circumferential direction thereof different magnetic poles (N poles and S poles) magnetized in the axial direction.

A group of magnetic bodies (to be referred to as first and second sensor yoke units) 22 and 24 having different diameters are arranged in one of the regions on both sides in the axial direction of the permanent magnet 20 centering thereon. The large diameter first sensor yoke unit 22 is formed by integrating a disk portion 22A and a cylindrical portion 22B, and a plurality of claw poles 26, protruding to the inside from the bottom of the cylindrical portion 22B, are arranged at equal intervals along the circumferential direction on the cylindrical portion 22B. In addition, the small diameter second sensor yoke unit 24 is formed by integrating a disk portion 24A and a cylindrical portion 248, and a plurality of claw poles 28, protruding to the outside from the cylindrical portion 24B, are arranged at equal intervals along the circumferential direction on the bottom side of the cylindrical portion 248. Each claw pole 26 and 28 is formed into a trapezoidal shape, mutually and reciprocally fit together, and are arranged facing each magnetic pole of the permanent magnet 20 while maintaining a gap there between. The first and second sensor yoke units 22 and 24 are arranged within the magnetic field of the permanent magnet 20, and are composed as elements of the magnetic circuit of the permanent magnet 20, and when one claw pole 26 opposes an S pole of the permanent magnet 20, the other claw pole 28 opposes an N pole of the permanent magnet 20. Furthermore, the claw poles 26 and 28 are not limited to a trapezoidal shape, but rather may also have a triangular shape or rectangular shape. In addition, although the back yoke 18 may not be provided on the back of the permanent magnet 20, it is preferably provided since this enables leakage of magnetic flux to be reduced.

A pair of auxiliary magnetic bodies (to be referred to as first and second magnetism collecting yoke units) 30 and 32 are arranged while maintaining a fixed interval adjacent to the first and second sensor yoke units 22 and 24. The first and second magnetism collecting yoke units 30 and 32 are formed into the shape of a circular ring and are arranged so as to surround the second shaft body 16. The first magnetism collecting yoke unit 30 is formed by integrating a disk portion 30A and a cylindrical portion 30B, and magnetic flux concentrating portion constituent unit 34 is formed protruding from the cylindrical portion 30B on a portion of the cylindrical portion 30B. The second magnetism collecting yoke unit 32 is formed by integrating a disk portion 32A and a cylindrical portion 32B, and a magnetic flux concentrating portion constituent unit 36 is formed protruding from the cylindrical portion 32A on a portion of the cylindrical portion 32A. The disk portion 32B of the second magnetism collecting yoke unit 32 is inserted inside the cylindrical portion 30A of the first magnetism collecting yoke unit 30. A linear type of magnetic flux detector 38, the output voltage of which changes according to the amount of magnetic flux, is inserted between the magnetic flux concentrating portion constituent unit 34 and the magnetic flux concentrating portion constituent unit 36.

The first and second magnetism collecting yoke units 30 and 32 compose a magnetic circuit by being arranged at a fixed interval facing the first and second sensor yoke units 22 and 24 within the magnetic field of the permanent magnet 20, and as a result of the gap in the axial direction between the magnetic flux concentrating portion constituent units 34 and 36 of the first and second magnetism collecting yoke units 30 and 32 being narrower than other portions, magnetic flux generated from the permanent magnet 20 can be collected while concentrating in the magnetic flux concentrating portion constituent units 34 and 36. In this case, in contrast to the first and second magnetism collecting yoke units 30 and 32 being fixed to a stationary member in the state of being integrally molded with a resin 42, the first and second sensor yoke units 22 and 24 are fixed to the second shaft body 16 in the state of being integrally molded with a resin 40. However, although both compose a magnetic circuit in the state of facing each other, even if the first and second sensor yoke units 22 and 24 rotate, there is no change in the total amount of magnetic flux that passes through both. Furthermore, examples of molding methods that can be used include insert molding and potting.

In addition, by inserting the magnetic flux detector 38 into a gap in the axial direction between the magnetic flux concentrating portion constituent units 34 and 36 of the first and second magnetism collecting yoke units 30 and 32, the amount of magnetic flux passing through the gap in the axial direction of the magnetic flux concentrating portion constituent units 34 and 36 can be accurately measured by the magnetic flux detector 38.

The magnetic flux detector 38 may be any such detector capable of measuring magnetic flux, such as a Hall element, MR element or MI element. In addition, although only one magnetic flux detector 38 is required, the use of two or more makes it possible to enhance the reliability of the device. In the case of using two or more of the magnetic flux detector 38, if the direction in which magnetic flux is detected by each magnetic flux detector 38 is changed, and magnetic flux is measured based on the difference in outputs of each magnetic flux detector 38, then fluctuations in the zero point can be cancelled out. At this time, although the magnetic flux concentrating portion constituent units 34 and 36 may be provided at one location each on the first and second magnetism collecting yoke units 30 and 32, the providing thereof at two or more locations is preferable since it enables the surface area of each magnetic flux concentrating portion constituent unit 34 and 36 to be managed.

Furthermore, the element of the magnetic flux detector 38 is typically housed in a plastic package, and the element itself is smaller than the external dimensions of the package. Consequently, the surface area of the parallel portions that are mutually parallel of the magnetic flux concentrating portion constituent units 34 and 36 are matched to the size of the element itself rather than the size of the package.

However, since the saturation magnetic flux density of the material of the magnetic flux concentrating portion constituent units 34 and 36 ends up being exceeded if the surface area is excessively small, the surface area preferably does not cause magnetic saturation.

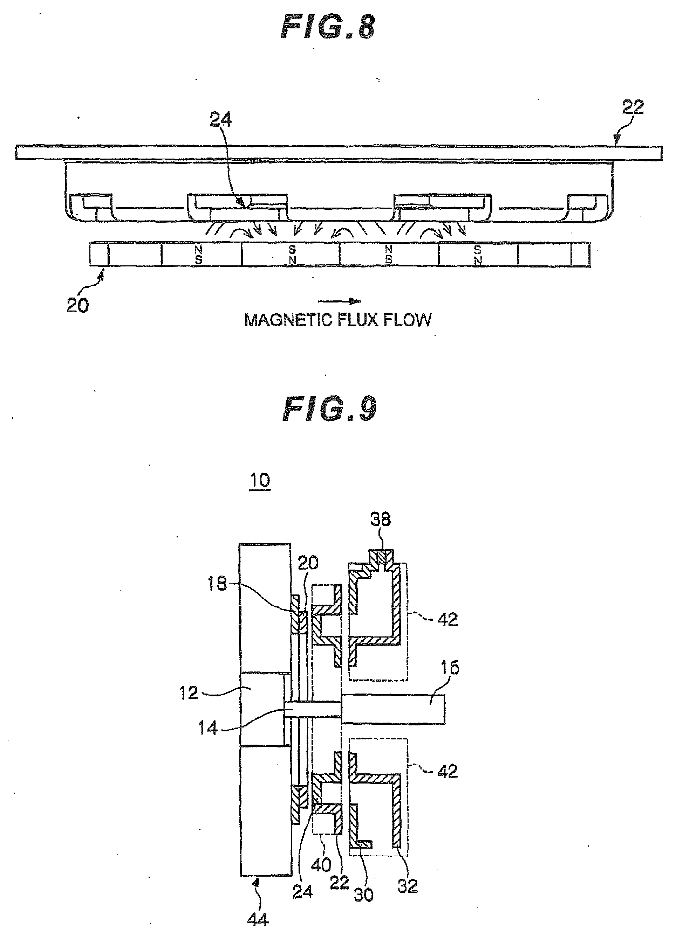

Next, an explanation is provided of the operation of the torque detector 10 according to the configuration described above. As shown in FIG. 7, in the absence of a torque input, the center in the circumferential direction of the claw poles 26 and 28 is located on the boundary of the permanent magnet 20, and since the permeance with respect to the N and S poles of the permanent magnet 20 as viewed from the claw poles 26 and 28 is equal, the flow of magnetic flux becomes as shown in FIG. 8. More specifically, magnetic flux generated from an N pole of the permanent magnet 20 enters the claw pole 26 of the first sensor yoke unit 22 and subsequently enters an S pole of the permanent magnet 20. Accordingly, since magnetic flux does not flow through the magnetic flux detector 38, the magnetic flux detector 38 outputs an intermediate voltage.

When torque is input as a result of a driver turning the steering wheel, the input side of the torsion bar 14 rotates in the same manner as the steering wheel, and torsion is generated in the torsion bar 14 itself corresponding to the input torque. As a result of this torsion, a relative angle displacement is generated between the input side and output side of the torsion bar 14. The relative angle displacement generated between the input side and output side of the torsion bar 14 appears in the form of a relative angle displacement between the claw poles 26 and 28 of the torque detector of the present invention and the permanent magnet 20. When a relative angle displacement is generated between the claw poles 26 and 28 and the permanent magnet 20, the balance of permeance is disturbed as shown in FIG. 8, and magnetic flux flows through a magnetic circuit containing the magnetic flux detector 38, namely through a magnetic circuit in which magnetic flux generated from an N pole of the permanent magnet 20 flows to the claw pole 26 of the first sensor yoke unit 22, flows through the magnetic flux detector 38 located between the magnetic flux concentrating portion constituent unit 34 and the magnetic flux concentrating portion constituent unit 36 via the first magnetism collecting yoke unit 30 and the magnetic flux concentrating portion constituent unit 34, and returns to an S pole of the permanent magnet 20 via the magnetic flux concentrating portion constituent unit 36, the second magnetism collecting yoke unit 32, the second sensor yoke unit 24 and the claw pole 28. As a result of detecting magnetic flux generated in this magnetic circuit containing the magnetic flux detector 38 with the magnetic flux detector 38, torque applied to the torsion bar 14 can be detected by measuring a relative angle displacement.

According to the present embodiment, since the permanent magnet 20 is formed into the shape of a flat annular body, has different magnetic poles in the circumferential direction magnetized in the axial direction, and is arranged facing the first and second sensor yoke units 22 and 24 and the first and second magnetism collecting yoke units 30 and 32 in the axial direction of the first shaft body 12, the length thereof in the axial direction can be shortened, thereby making it possible to contribute to reducing the size and cost of a device. Furthermore, since the first and second yoke sensor units 22 and 24 and the first and second magnetism collecting yoke units 30 and 32 have a flat shape, they can be processed with a flat press and the like, thereby enabling costs to be reduced while also being able to shorten the dimension in the axial direction.

In addition, since the first and second sensor yoke units 22 and 24 and the first and second magnetism collecting yoke units 30 and 32 are formed using iron plates, the cross-sectional area through which the magnetic flux passes can be decreased. Consequently, in the present embodiment, cross-sectional surface area is managed so that the maximum value of magnetic flux density of the magnetic flux flowing through the first and second sensor yoke units 22 and 24 and the first and second magnetism collecting yoke units 30 and 32 is 90% or less of the saturation magnetic flux density of the material. As a result, changes in magnetic flux can be measured with high accuracy without the magnetic flux leaking to the outside from the first and second sensor yoke units 22 and 24 and the first and second magnetism collecting yoke units 30 and 32.

Next, an explanation is provided of another example of the configuration of the torque detector according to a first embodiment based on FIG. 9. This torque detector 10 has the permanent magnet 20 fixed to the side of a worm gear 44 of an electric power steering (EPS) device through the back yoke 18, while the other constituents are the same as the previously described torque detector 10 shown in FIGS. 1 to 8.

If the permanent magnet 20 is fixed to the side of the worm gear 44 of an electric power steering (EPS) device through the back yoke 18, the dimension of the entire device in the axial direction can be further shortened.

Furthermore, in the case of the material of the worm gear 44 is iron, since the worm gear 44 fulfills the role of the back yoke 18, the back yoke 18 can be omitted. On the other hand, in the case the material of the worm gear 44 is plastic, the back yoke 18 is preferably present since this prevents leakage of magnetic flux.

In addition, in each of the above-mentioned embodiments, a ferrite magnet or rare earth magnet (such as an Nd-Fe-B magnet or Sm-Co magnet) can be used for the material of the permanent magnet 20. In addition, although a metal magnet or sintered magnet may be used, a plastic magnet or rubber magnet may also be used.

In addition, although the claw poles 26 and 28 of the first and second sensor yoke units 22 and 24 may be made to respectively and reciprocally fit together in mutual opposition as in the present embodiment, they may also be made to mutually and reciprocally fit together from a single direction. For example, a group of first and second sensor yoke units 22 and 24 may be made to both mutually and reciprocally oppose the permanent magnet 20 from the outside.

### (2) Second Embodiment

### (2-1) Configuration of Torque Detector According to Second Embodiment

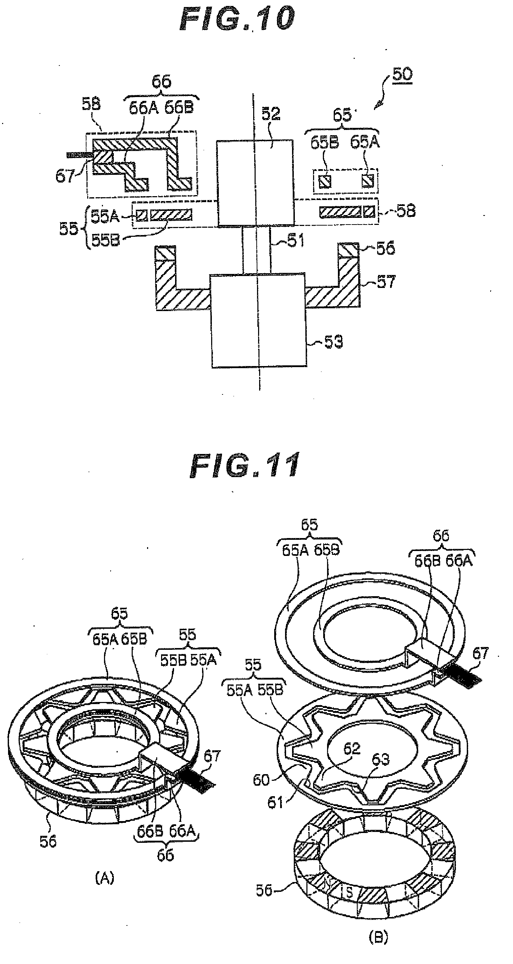

Reference symbol 50 in FIGS. 10 and 11 indicates overall a torque detector according to a second embodiment. This torque detector 50 is provided with a first shaft 52 and a second shaft 53 connected with a twisting element in the form of a torsion bar 51. The first shaft 52 and the second shaft 53 are composed in the shape of cylinders, and their central axis and the central axis of the torsion bar 51 extend along a straight line.

A flat sensor yoke 55 to be described later extending to the outside in the radial direction of the first shaft 52 is attached to the first shaft 52 in the state of being molded with a resin 58. A ring-shaped permanent magnet 56 magnetized in multiple poles in the circumferential direction is fixed and arranged on the second shaft 53 so that one side in the axial direction of the permanent magnet 56 faces the sensor yoke 55 via a back yoke 57.

The sensor yoke 55 is composed of a ring-shaped first sensor yoke unit 55A, and a second sensor yoke unit 55B, having a smaller diameter than the first sensor yoke unit 55A and arranged coaxially and in the same or roughly the same plane as the first sensor yoke unit 55A. As a result of arranging the first and second sensor yoke units 55A and 55B in the same or roughly the same plane in this manner, they can be integrated with a smaller amount of the resin 58, thereby making it possible to reduce costs.

In addition, the first and second sensor yoke units 55A and 55B are formed into the shape of flat plates of the same or roughly the same thickness. As a result of forming the first and second sensor yoke units 55A and 55B into the shape of flat plates in this manner, the length in the axial direction of the first and second sensor yoke units 55A and 55B can be shortened, thereby making it possible to correspondingly reduce the overall size of a device. In addition, as a result of forming the first and second sensor yoke units 55A and 55B to have the same or roughly the same thickness, they can be processed with a single iron plate during press forming, thereby making it possible to reduce processing costs.

A trapezoidal protrusion 60 and an indentation 61 are alternately formed along the circumferential direction on the inner periphery of the first sensor yoke unit 55A, protruding to the side on which the second yoke sensor unit 55B is present in the radial direction (namely, towards the inside in the radial direction), and a trapezoidal protrusion 62 and an indentation 63 are alternately formed along the circumferential direction on the outer periphery of the second sensor yoke unit 55B, protruding to the side on which the first sensor yoke unit 55A is present in the radial direction (namely, towards the outside in the radial direction).

The number of the protrusion 60 and the indentation 61 of the first sensor yoke unit 55A and the number of the protrusion 62 and the indentation 63 of the second sensor yoke unit 55B are selected so that either number is half the number of poles of the permanent magnet 56 to be described later. The first and second sensor yoke units 55A and 55B are integrated in a state in which the protrusion 60 and the indentation 61 of the first sensor yoke unit 55A and the indentation 63 and the production 62 of the second sensor yoke unit 55B are mutually engaged in a non-contact state.

The permanent magnet 56 is composed by alternatively magnetizing an annular hard magnetic body to N poles and S poles at a prescribed angular interval in the circumferential direction, In the case of the present embodiment, the permanent magnet 56 is magnetically arranged to N and S poles at intervals of an angle of 22.5°, and the permanent magnet 56 has a total of 16 magnetic poles. In FIG. 11, diagonal lines represent N poles. Furthermore, a ferrite magnet or rare earth magnet, metal magnet, sintered magnet, plastic magnet or rubber magnet and the like can be used for the magnetic material composing the permanent magnet 56.

A magnetism collecting yoke 65 is arranged on the opposite side of the sensor yoke 55 from the side of the permanent magnet 56. The magnetism collecting yoke 65 is composed of a ring-shaped first magnetism collecting yoke unit 65A, and a ring-shaped second magnetism collecting yoke unit 65B, having a smaller diameter than the first magnetism collecting yoke unit 65A and arranged coaxially and in the same plane as the first magnetism collecting yoke unit 65A.

The magnetism collecting yoke 65 is fixed to a stationary member not shown so that the first magnetism collecting yoke unit 65A continuously faces the outer periphery of the first sensor yoke unit 55A over the entire circumferential direction, and the second magnetism collecting yoke unit 65B continuously faces the inner periphery of the second sensor yoke unit 55B over the entire circumferential direction. As a result of arranging the first or second magnetism collecting yoke unit 65A or 65B so as to be facing the first and second sensor yoke units 55A and 55B over their entire circumference in this manner, the occurrence of measurement error attributable to fluctuations in the relative angle between the sensor yoke 55 and the magnetism collecting yoke 65 can be prevented.

In addition, a magnetic flux concentrating portion 66 is provided on the magnetism collecting yoke 65. More specifically, a magnetic flux concentrating portion constituent unit 66A is formed in the form of a half body of the magnetic flux concentrating portion 66 so as to protrude towards the outside in the radial direction from a portion of the first magnetism collecting yoke unit 65A, while a magnetic flux concentration portion constituent unit 66B is formed in the form of the other half body of the magnetic flux concentrating portion 66 so as to protrude towards the outside in the radial direction from the second magnetism collecting yoke unit 65B and oppose the magnetic flux concentrating portion constituent unit 66A with a gap there between. A magnetic flux detector 67 is arranged between the magnetic flux concentrating portion constituent unit 66A of the first magnetism collecting yoke unit 65A and the magnetic flux concentrating portion constituent unit 66B of the second magnetism collecting yoke unit 65B.

As a result of providing the magnetic flux concentrating portion 66 on the magnetism collecting yoke 65 in this manner, magnetic flux that passes through the magnetism collecting yoke 65 can be concentrated in the magnetic flux concentrating portion 66, thereby making it possible to facilitate detection of magnetic flux by the magnetic flux detector 67 described below. In addition, the providing of the first and second magnetic flux concentrating portion constituent units 66A and 66B makes it easier to install the magnetic flux detector 67.
Moreover, if three or more magnetic flux detectors 67 are used, even if one of the magnetic flux detectors 67 malfunctions, highly reliable data can be obtained from the remaining two or more normal magnetic flux detectors 67.

A detector capable of detecting magnetic flux intensity such as a Hall element, MR element or MI element can be used for the magnetic flux detector 67. In the case of the present embodiment, two magnetic flux detectors 67 are used. This is because the use of two magnetic flux detectors 67 enables sensitivity to be doubled by using a difference in the outputs thereof, thereby making it possible to cancel out zero point drift. In addition, by using two magnetic flux detectors 67, sensor signals can be duplexed, making it possible to improve reliability.

As shown in FIG. 10, the first and second magnetism collecting yoke units 65A and 65B and the magnetic flux detector 67 are integrated into a single unit by molding with the resin 58. However, the present embodiment is not limited thereto, but rather, for example, only the first and second magnetism collecting yoke units 65A and 65B may be molded with the resin 58, and the magnetic flux detector 67 may be inserted from the back.

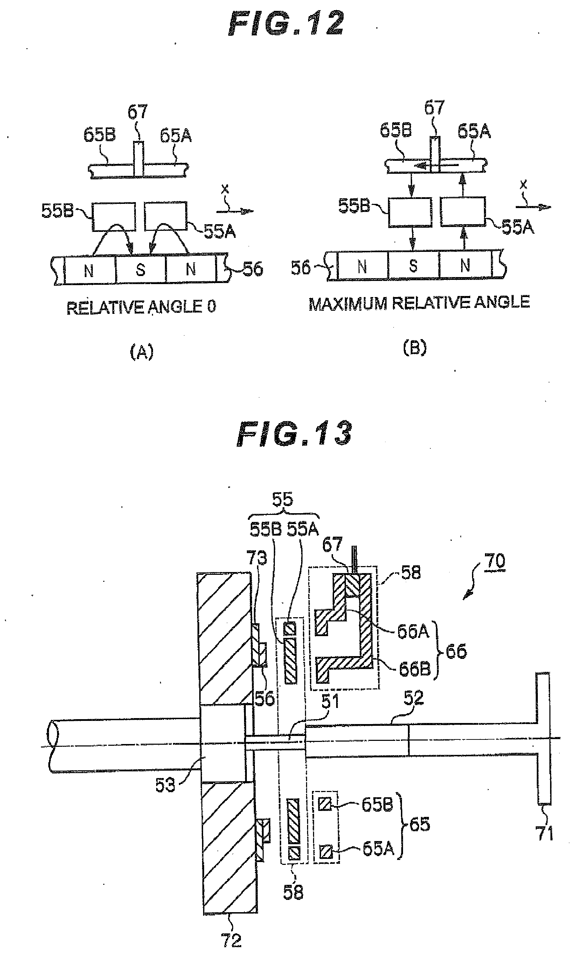

Next, an explanation is provided of the operation of the torque detector 50. A schematic drawing of the magnetic circuit in this torque detector 50 is shown in FIG. 12.

As shown in FIG. 12A, in the torque detector 50, when the relative angle between the sensor yoke 55 and the permanent magnet 56 is "0", the first and second sensor yoke units 55A and 55B are fixed to the first or second shafts 52 and 53 so that the respective center line of the protrusions 60 and 62 are aligned in the axial direction with boundaries between the N poles and S poles of the permanent magnet 56. Thus, when the relative angle between the sensor yoke 55 and the permanent magnet 56 is "0", the area of the portion opposing an N pole of the permanent magnet 56 in the protrusions 60 and 62 of the first and second sensor yoke units 55A and 55B is equal to the area of the portion opposing an S pole of the permanent magnet 56 in the protrusions 60 and 62.

When in this state, magnetic flux generated from an N pole of the permanent magnet 56 enters an S pole of the permanent magnet 56 after passing through the protrusions 60 and 62 of the first and second sensor yoke units 55A and 55B. In other words, when the relative angle between the sensor yoke 55 and the permanent magnet 66 is "0", since the amount of magnetic flux entering the protrusion 60 of the first sensor yoke unit 55A and the protrusion 62 of the second sensor yoke unit 55B is equal to the amount leaving there from, magnetic flux emitted from the permanent magnet 56 does not pass through the magnetic flux detector 67.

On the other hand, in the torque detector 50 as shown in FIG. 12B, the state as shown in FIG. 12A in which the sensor yoke 55 rotates to the right as indicated by arrow x, or to the left in the opposite direction there from, relative to the permanent magnet 56, the protrusion 60 of the first sensor yoke unit 55A only faces an N pole portion or S pole portion of the permanent magnet 56, and the protrusion 62 of the second sensor yoke unit 55B only faces an S pole portion or N pole portion of the magnetic sensor 56 results in the relative angle between the sensor yoke 55 and the permanent magnet 56 reaching a maximum.

When in this state, when the balance between the amounts of magnetic flux entering and leaving the first and second sensor yoke units 55A and 55B is lost, and the sensor yoke 55 has rotated to the right relative to the permanent magnet 56, magnetic flux generated from an N pole of the permanent magnet 56 enters an S pole of the permanent magnet 56 from the first sensor yoke unit 55A after sequentially passing through the first magnetism collecting yoke unit 65A, the magnetic flux concentrating portion constituent unit 66A, the magnetic flux detector 67, the magnetic flux concentrating portion constituent unit 66B, the second magnetism collecting yoke unit 65B and the second sensor yoke unit 55B. In addition, when the sensor yoke 55 has rotated to the left relative to the permanent magnet 56, magnetic flux generated from an N pole of the permanent magnet 56 enters an S pole of the permanent magnet 56 from the second sensor yoke unit 55B after sequentially passing through the second magnetism collecting yoke unit 65B, the magnetic flux concentrating portion constituent unit 66B, the magnetic flux detector 67, the magnetic flux concentrating portion constituent unit 66A, the first magnetism collecting yoke unit 65A and the first sensor yoke unit 55A.

In addition, when the sensor yoke 55 has rotated to the right relative to the permanent magnet 56 and the relative angle between the sensor yoke 55 and the permanent magnet 56 is between "0" and the maximum angle, an amount of magnetic flux corresponding to the relative angle between the sensor yoke 55 and the permanent magnet 56 enters an S pole of the permanent magnet 56 from the first sensor yoke unit 55A after sequentially passing through the first magnetism collecting yoke unit 65A, the magnetic flux concentrating portion constituent unit 66A, the magnetic flux detector 67, the magnetic flux concentrating portion constituent unit 66B, the second magnetism collecting yoke unit 65B and the second sensor yoke unit 558. Moreover, when the sensor yoke 55 has rotated to the right relative to the permanent magnet 56 and the relative angle between the sensor yoke 55 and the permanent magnet 56 is between "0" and the maximum angle, an amount of magnetic flux corresponding to the relative angle between the sensor yoke 55 and the permanent magnet 56 enters an S pole of the permanent magnet 56 from the second sensor yoke unit 55B after sequentially passing through the second magnetism collecting yoke unit 65B, the magnetic flux concentrating portion constituent unit 66B, the magnetic flux detector 67, the magnetic flux concentrating portion constituent unit 66A, the first magnetism collecting yoke unit 65A and the first sensor yoke unit 55A.

In this case, in the torque detector 50, since the sensor yoke 55 and the permanent magnet 56 are respectively fixed to the first or second shaft 52 and 53, and the first shaft 52 and the second shaft 53 are connected via the torsion bar 51, in the case torsional torque has acted between the first shaft 52 and the second shaft 53, the magnitude (amount of torsional torque) and orientation of that torsional torque appears as the relative angle (including orientation) between the sensor yoke 55 and the permanent magnet 56. Thus, the magnitude and orientation of the torsional torque that has acted between the first shaft 52 and the second shaft 53 can be detected based on the amount and orientation of magnetic flux detected by the magnetic flux detector 67 at this time.

As has been described above, in the torque detector 50 according to the present embodiment, the magnitude and orientation of torsional torque that has acted between the first shaft 52 and the second shaft 53 is detected as an amount of magnetic flux and orientation thereof that passes through the magnetic flux detector 67 accompanying a change in the relative angle between the sensor yoke 55 and the permanent magnet 56.

In this case, in the torque detector 50 according to the present embodiment, since the first and second sensor yoke units 55A and 55B are flat, the length in the axial direction can be shortened. Thus, the torque detector 1 can be constructed in a compact form.

FIG. 13, which uses the same reference symbols for those portions corresponding to FIGS. 10 and 11, shows a torque detector 70 as a variation of the previously described torque detector 50 show in FIGS. 10 and 11. This torque detector 70 is attached to an electric power steering (EPS) device that generates auxiliary steering torque with an electric motor corresponding to steering torque applied to a steering wheel 71 and transmits that torque to a steering mechanism after decelerating with a reduction gear.

This electric power steering device is provided with the steering wheel 71, the first shaft 52, the torsion bar 51, the second shaft 53, and a worm wheel 72 fixed to the second shaft 53 all lying on the same axis. In addition, the torque detector 70 employs the same configuration as that of the previously described first embodiment with the exception of the permanent magnet 56 being fixed to one side of the worm wheel 72.

When the permanent magnet 56 is attached to the worm wheel 72 in this manner, the overall length in the axial direction can be shortened further. Furthermore, in the case the material of the worm wheel 72 is a magnetic material, since the worn wheel 72 fulfills the role of a back yoke, a back yoke is not particularly required. However, in the case the material of the worm wheel 72 is a non-magnetic material, the providing of a back yoke 73 as shown in FIG. 13 makes it possible to prevent leakage of magnetic flux.

Furthermore, although the present embodiment has described the case of forming the protrusions 60 and 62 of the first and second sensor yoke units 55A and 55B to have a trapezoidal shape, they may also have a triangular or rectangular shape.

In addition, although the present embodiment has described the case of the number of poles of the permanent magnet 56 being 16, a permanent magnet having a number of poles other than 16 may also be applied.

Moreover, although the present embodiment has described the case of the number of the protrusions 60 and 62 of the first and second sensor yoke units 55A and 55B being half the number of poles of the permanent magnet 56 and equal, the number thereof may also be different.

Moreover, although the present embodiment has described the case of the torsion bar 57 being attached in order to effectively utilize magnetic flux, the permanent magnet 56 may be attached directly to the second shaft 53.

Moreover, although the present embodiment has described the case of using two or more magnetic flux detectors for the magnetic flux detector 67, only one magnetic flux detector 67 may also be used.

Moreover, although the present embodiment has described the case of using a resin molding to integrate the sensor yoke 55 and the magnetism collecting yoke 65, an integrated structure may also be employed that incorporates a non-magnetic material such as plastic or aluminum.

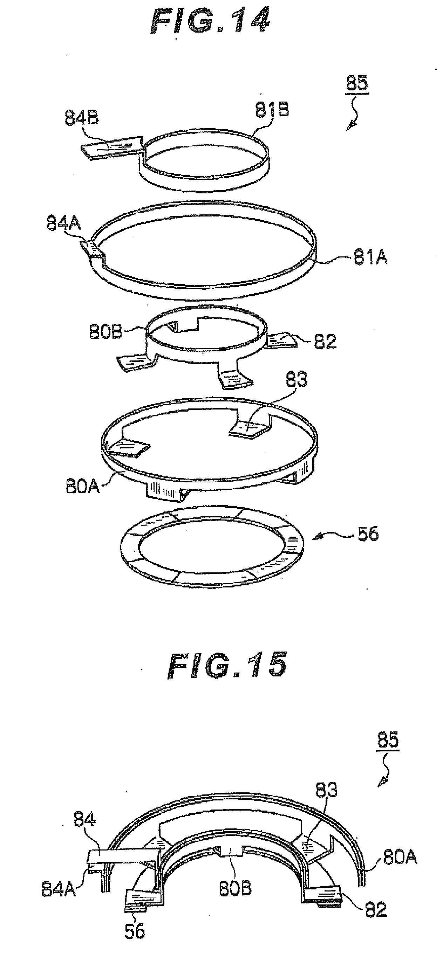

Moreover, although the present embodiment has described the case of configuring the torque detector 50 as shown in FIGS. 10 and 11, a wide range of other configurations can be applied. Other examples of the configuration of the torque detector 50 are shown in FIGS. 14 to 17.

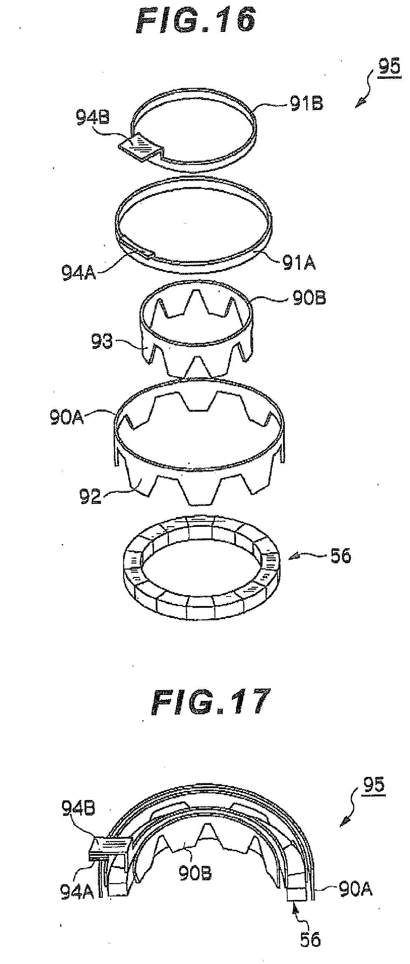

More specifically, as shown in FIGS. 14 and 15, first and second sensor yoke units 80A and 80B along with first and second magnetism collecting yoke units 81 A and 81B may be made to extend in the axial direction, and each protrusion (claw) 82 and 83 of the first and second sensor yoke units 80A and 80B may be made to oppose the permanent magnet 56 by bending so as to be mutually positioned without making contact. In addition, as shown in FIGS. 16 and 17, first and second sensor yoke units 90A and 90B along with first and second magnetism collecting yoke units 91 A and 91 B may be made to extend in the axial direction and oppose a permanent magnet 96. In this case, the inner and outer peripheral surfaces of the permanent magnet 56 are magnetized in multiple poles. Furthermore, since the operation of torque detectors 85 and 95 shown in FIGS. 14 and 15 is the same as that shown in FIGS. 10 and 11, an explanation thereof is omitted.

### (2-2) Configuration of Power Supply System for Torque Detector of the

### Present Embodiment

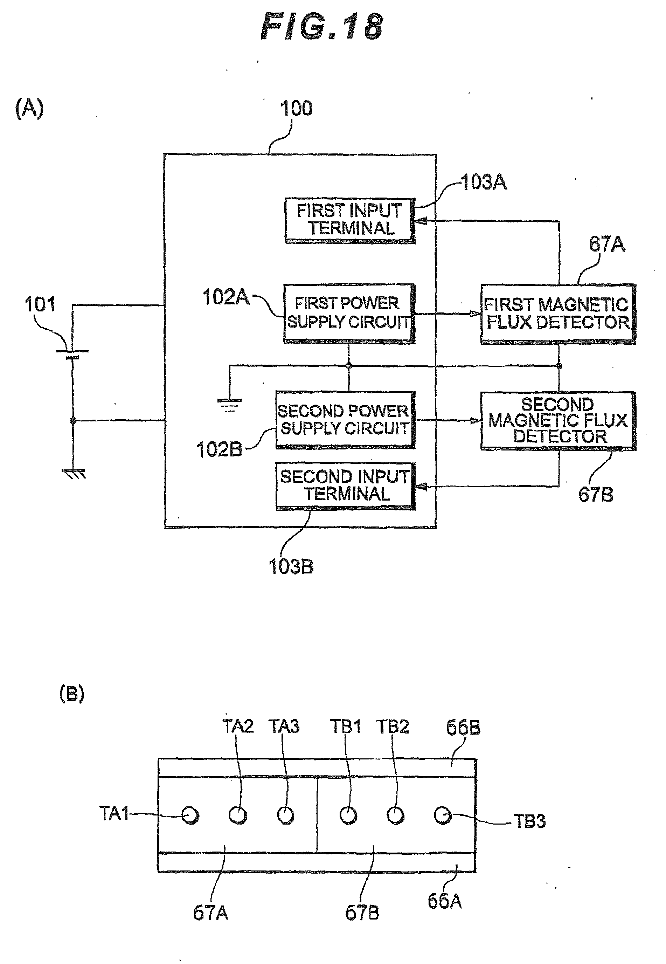

Next, an explanation is provided of the configuration of a power supply system for the torque detector 50. FIG. 18A shows a control block diagram (circuit diagram) of the torque detector 50. Reference symbol 100 indicates a control unit (electronic control unit: ECU) for controlling the entire EPS.

As shown in the drawings, a battery 101 is connected to the control unit 100. In addition, the control unit 100 is connected to a ground potential.

A first power supply circuit 102A and a second power supply circuit 102B, respectively composed of a linear regulator, switching regulator, Zener diode or transistor circuit and the like, are provided within the control unit 100. These circuits are connected to the battery 101 via wiring not shown, and an input voltage is stepped down to the power supply voltage (drive voltage) of two magnetic flux detectors 67 (to be suitably referred to as first and second magnetic flux detectors 67A and 67B). This voltage (electric power) is output from the first and second power supply circuits 102A and 102B, and respectively supplied (input) to the first and second magnetic flux detectors 67A and 67B.

The first and second magnetic flux detectors 67A and 67B output an output signal (voltage) corresponding to magnetic flux, and these output signals are respectively input to a first or second input terminal 103A and 103B corresponding to the control unit 100. Torque is calculated from these output signals, a drive current of an electric motor (not shown) is calculated for generating auxiliary steering torque corresponding to the input torque, whereby the electric motor is driven. More specifically, the electric motor is driven in accordance with the magnetic flux (steering torque) and the auxiliary steering torque is generated and transmitted to an output shaft, thereby enabling operation of an electric power steering device.

Here, an explanation is provided of the advantages of providing a plurality of the magnetic flux detectors 67. Device reliability can be enhanced by using two or more of the magnetic flux detectors 67. For example, in the case of using two of the magnetic flux detectors 67, magnetic flux can be measured by changing the direction in which magnetic flux is detected for each magnetic flux detector 67 and using the output signal from each magnetic flux detector 67 as a differential signal. In this case, zero point fluctuation can be canceled out. Moreover, the use of two of the magnetic flux detectors 67 makes it possible to widen dynamic range accompanying differential output, thereby increasing resistance to the effects of extrinsic noise and canceling out temperature drift of the magnetic flux detectors 67.

Moreover, the use of three or more of the magnetic flux detectors 67 allows the obtaining of highly reliable data by using the majority rule since two or more of the magnetic flux detectors continue to operate normally even if one has malfunctioned.

FIG. 18B shows an example of the arrangement of the first and second magnetic flux detectors 67A and 67B between the magnetic flux concentrating portion constituent units 66A and 66B. In the present embodiment, the first and second magnetic flux detectors 67A and 67B are arranged in a row between the magnetic flux concentrating portion constituent unit 66A and the magnetic flux concentrating portion constituent unit 66B. Three wires (terminals TA1 to TA3 and TB1 to TB3) are led from each of the first and second magnetic flux detectors 67A and 678, and these wires are connected to the control unit 100. These wires serve as, for example, power supply potential wires, ground potential wires and first or second input terminal connecting wires as previously described (see FIG. 18A). The numbers and functions of the wires are not limited to those described above.

As has been described above, in the second embodiment, since two of the magnetic flux detectors 67 are arranged, and the first and second power supply circuits 102A and 102B are provided independently for supplying power to each of these magnetic flux detectors 67, a completely duplex system can be configured. Thus, even in the case an abnormality has occurred in one of the power supply circuits 102A and 102B or in one of the magnetic flux detectors 67A and 67B, since torque can be detected using a group consisting of the other power supply circuit 102A or 102B and magnetic flux detector 67A or 67B in which an abnormality has not occurred, the reliability of the torque detector 50 can be improved.

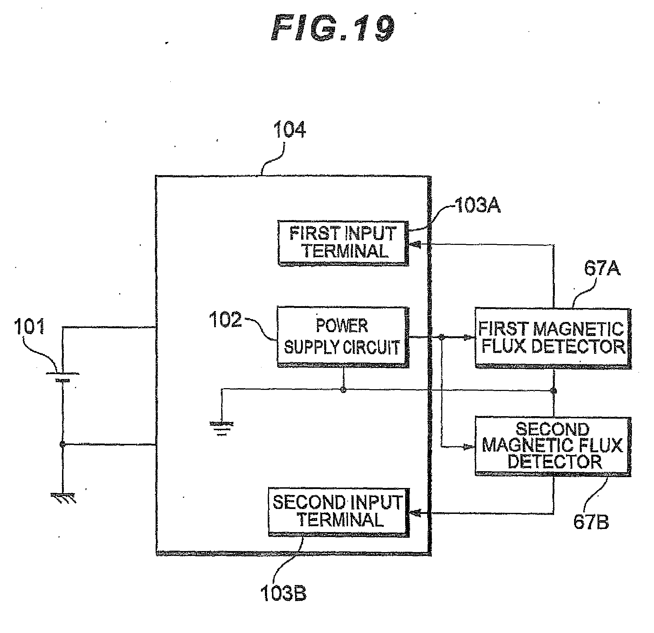

For example, in a control unit 104 having the configuration shown in FIG. 19, although torque cannot be detected in the case an abnormality has occurred in the power supply circuit 102, torque can be detected by the present embodiment, thereby enabling the reliability of the torque detector 50 to be improved.

As was previously described, this type of torque detector 50 is used in an electric power steering device. Namely, a torque detector in the form of the torque detector 50 is used in an electric power steering device in which steering torque applied to an input shaft is detected by a detector, auxiliary steering torque is generated from an electric motor corresponding to the detected steering torque, and that auxiliary steering torque is transmitted to an output shaft. As a result of configuring in this manner, even in the case an abnormality has occurred in one of the power supply circuits 102A and 102B or in one of the magnetic flux detectors 67A and 678, since torque can be detected using a group consisting of the other power supply circuit 102A or 102B and magnetic flux detector 67A or 67B in which an abnormality has not occurred as previously described, the reliability of the electric power steering device can be improved.

Furthermore, although the present embodiment has described the case of arranging two of the magnetic flux detectors 67 between the magnetic flux concentrating portion constituent units 66A and 66B, three or more of the magnetic flux detectors 67 may also be arranged. In this case, the power supply circuits are provided in the same number as the number of the magnetic flux detectors 67. In addition, although a description of the case of providing only one group of magnetic flux concentrating portion constituent members 66A and 66B in the magnetism collecting yoke 65 in FIGS. 10 and 11, two or more groups of the magnetic flux concentrating portion constituent units 66A and 66B may also be provided, and the magnetic flux detector 67 may be arranged at each location thereof.

In addition, although the present embodiment has provided a description such that a linear regulator, switching regulator, Zener diode or transistor circuit and the like are applied for the first and second power supply circuits 102A and 102B, a wide range of various other devices can also be applied provided they are able to fulfill the requirements of controlling voltage and supplying a current required for operating the first and second magnetic flux detectors 67A and 67B.

Moreover, although the present embodiment has described the case of incorporating the first and second power supply circuits 102A and 102B within the control unit 100, these first and second power supply circuits 102A and 102B may also be provided separately from the control unit 100. In addition, in consideration of the case of battery voltage falling below the power supply voltage of the first and second magnetic flux detectors 67A and 67B, a type capable of not only stepping down voltage but also stepping up voltage may be applied for the first and second power supply circuits 102A and 102B.

Moreover, although the present embodiment has provided a description of the case of providing a number of power supply circuits equal to the number of magnetic flux detectors 67 in the torque detector 50 configured as shown in FIGS. 10 and 11, similar effects can be obtained by providing a number of power supply circuits equal to the number of magnetic flux detectors 67 in the torque detector 10 configured as shown in FIGS. 1 to 6 or in torque detectors having other configurations.

### (2-3) Materials of Sensor Yoke and Magnetism Collecting Yoke

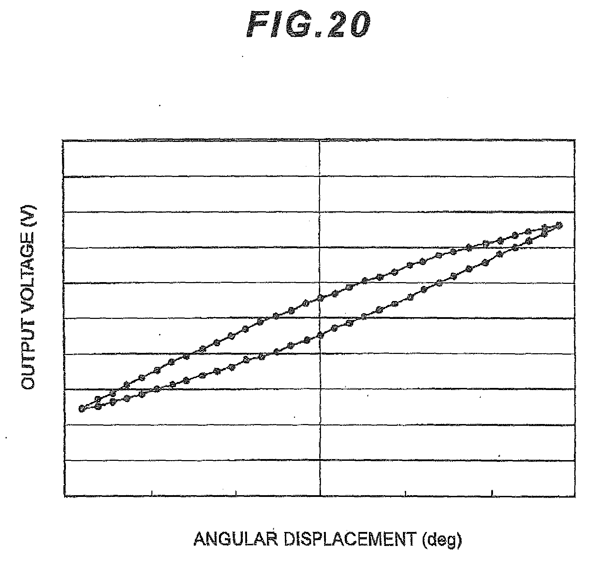

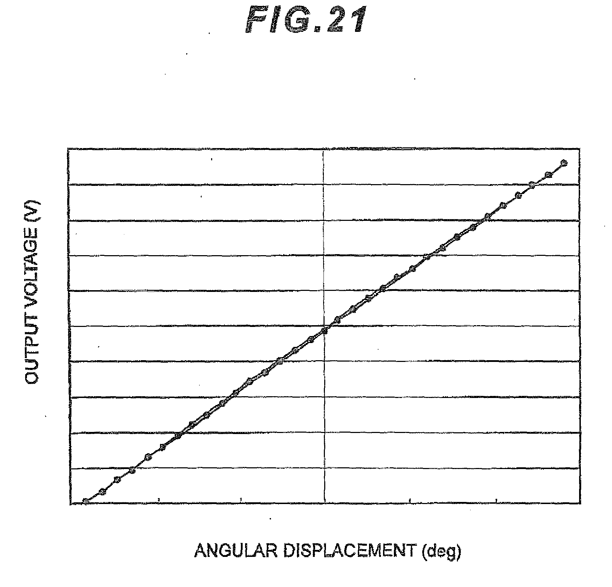

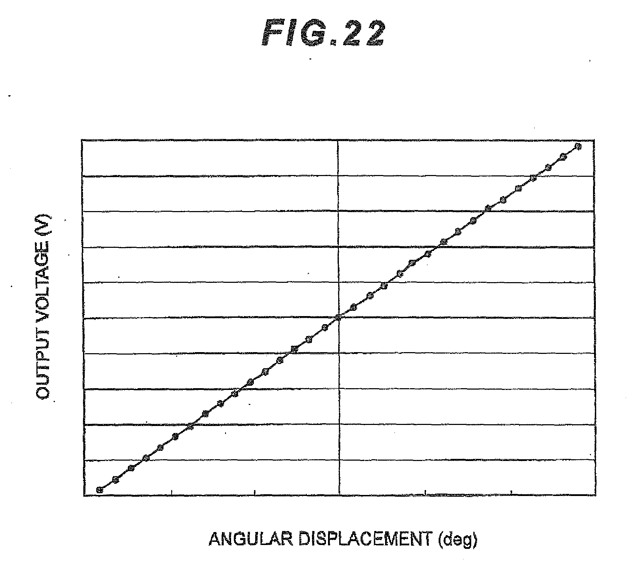

Next, an explanation is provided of the materials of the sensor yoke 55 and the magnetism collecting yoke 65. FIG. 20 shows the output characteristics of a magnetic detection element when structural steel is used for the material of the sensor yoke 55 and magnetism collecting yoke 65. Output voltage [V] is plotted on the vertical axis, while angular displacement [deg] is plotted on the horizontal axis (and to apply similarly for FIGS. 21 and 22).

As shown in FIG. 20, hysteresis is present in the output characteristics, thereby making it difficult to accurately measure the angle from the output value. This is due to the magnetic characteristics of the material used in the sensor yoke 55 and the magnetism collecting yoke 65. Therefore, the results of using an alloy containing nickel to improve the magnetic characteristics of the sensor yoke 55 and the magnetism collecting yoke 65 are shown in FIG. 21. FIG. 21 is a graph of the magnetic characteristics when using an alloy containing about 45 by weight (wt%) nickel for the sensor yoke 55 and the magnetism collecting yoke 65.

When compared with the results of FIG. 20, output hysteresis can be seen to be improved considerably, thereby allowing the obtaining of satisfactory performance as a torque detector. In addition, performance can be seen to be improved considerably since the change (slope) in output voltage is large. However, a small amount of hysteresis still remains.

Therefore, output characteristics when using an alloy containing about 75% by weight of nickel in order to further improve magnetic characteristics are shown in FIG. 22.

As can be understood from FIG. 22, hysteresis can be seen to be reduced to nearly zero as compared with FIG. 21. However, since nickel is an expensive metal, the price of the magnetic body increases as the nickel content increases. Consequently, it is preferable to use as small amount of nickel as possible.

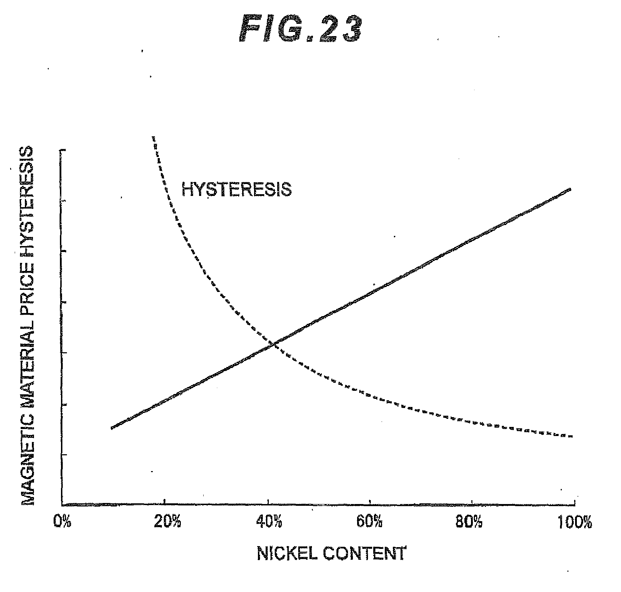

FIG. 23 indicates the relationship between nickel content and hysteresis. As can be understood from FIG. 23, hysteresis increased rapidly when the nickel content is less than 40% by weight, and it can be seen that a nickel content of 40% by weight or more is required for highly accurate measurement. However, as can be understood from FIG. 23, the price of the magnetic body itself increases with nickel content. Consequently, a lower nickel content is preferable in terms of costs.

Furthermore, as can be understood from FIG. 23, the degree of the reduction in hysteresis becomes small when nickel content exceeds 80% by weight. As a result, since the degree of the reduction in hysteresis is small in comparison with the degree of the increase in price, a nickel content of 40% to 80% by weight is preferable in terms of performance and cost.

In this manner, the magnetic permeability of the sensor yoke 55 and the magnetism collecting yoke 65 can be enhanced and the amount of magnetic flux passing through the sensor yoke 55, the magnetism collecting yoke 65 and the magnetic flux concentrating portion 66 can be increased by configuring the sensor yoke 55 and the magnetism collecting yoke 65 with an alloy having a nickel content of 40% to 80% by weight.

In addition, since coercive force also becomes smaller, output hysteresis can be reduced thereby making it possible to considerably improve the measurement accuracy of a torque detector.

In addition, high accurately assist can be realized by applying this type of torque detector 50 to an electric power steering device in which auxiliary steering torque is generated from an electric motor corresponding to the steering torque applied to a steering wheel, and that auxiliary steering torque is then transmitted to an output shaft of a steering mechanism after decelerating with a reduction gear.

Furthermore, although the present embodiment has provided a description of the case in which an alloy containing nickel is used for both the material of a magnetic body in the form of the sensor yoke 55 and an auxiliary magnetic body in the form of the magnetism collecting yoke 65, an alloy containing nickel may also only be used in one of those materials. Furthermore, it is more effective to use an alloy containing nickel for the sensor yoke 55.

In addition, although the present embodiment has provided a description of the case in which an alloy containing nickel is used for the material of the sensor yoke 55 and the magnetism collecting yoke 65 of the torque detector 50 configured as shown in FIGS. 10 and 11, similar effects can be obtained by using an alloy containing nickel for the material of the sensor yoke and magnetism collecting yoke of, for example, the torque detector 10 configured in the manner of FIGS. 1 to 6 or a torque detector having another configuration.

### (3) Third Embodiment

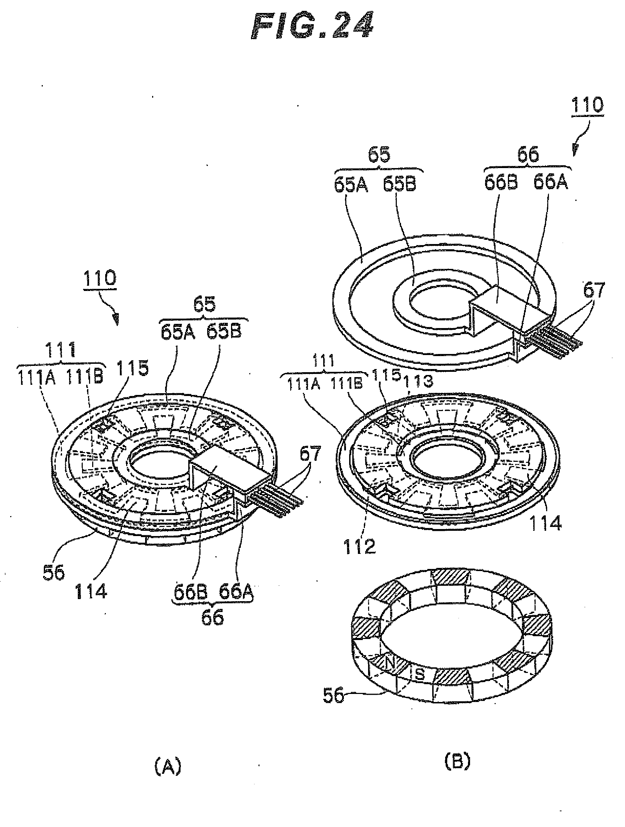

FIG. 24, which uses the same reference symbols for those portions corresponding to FIG. 11, shows a torque detector 110 according to a third embodiment. This torque detector 110 is composed in the same manner as the torque detector 50 according to the second embodiment with the exception of protrusions 112 and 113 of first and second sensor yokes 111 A and 111 B comprising a sensor yoke 111 respectively being formed into a trapezoidal shape, and a resin 114 covering the first and second sensor yokes 111A and 111 B having a different shape.

Namely, in the case of the torque detector 110 according to the present embodiment, the resin 114 is filled into a space between the first sensor yoke unit 111A and the second sensor yoke unit 111B while leaving a gap 115.

In this case, as shown in FIG. 24B, the resin 114 is molded so that the portion of the first sensor yoke 111 A corresponding to the first magnetism collecting yoke 65A and the portion of the second sensor yoke 111B corresponding to the second magnetism collecting yoke 65B are exposed without being covered by the resin 114.

As a result, in this torque detector 110, in comparison with the case of covering the entire surface of the yoke sensor 111 with the resin 114, the magnetism collecting yoke 65 can be arranged in close proximity to the sensor yoke 111, thereby enabling the length in the axial direction of the entire torque detector 110 to be made even smaller.

In addition, since the resin is molded in the manner described above in this torque detector, the gap between the sensor yoke 111 and the magnetism collecting yoke 65 can be made to be small. Although this gap composes a magnetic circuit through which passes magnetic flux from the permanent magnet 56, since this magnetic circuit can be shorted by making this gap smaller, magnetic flux from the sensor yoke 111 can be more reliably collected by the magnetism collecting yoke 65. In the case the gap is composed of a non-magnetic material in particular (air in the case of the present embodiment), since magnetic permeability is extremely weak in comparison with typical magnetic materials, effects resulting from making this gap smaller are remarkable. Furthermore, since the portion of the resin 114 on the side that opposes the permanent magnet 56 that does not compose the magnetic circuit increases the overall mechanical strength of the torque detector 110, it is preferably molded so as to cover the sensor yoke 11 at an adequate thickness.

Next, an explanation is provided of a method of producing this torque detector 50.

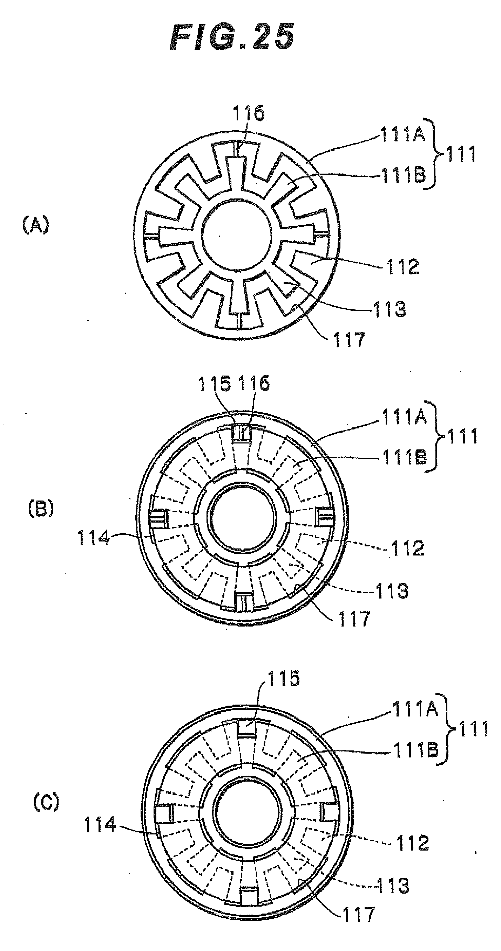

FIGS. 25A to 25C indicate a procedure of producing the torque detector 110 as claimed in the present embodiment. This torque detector 110 is characterized in terms of production by the production method extending through integrally molding the sensor yoke 111 with the resin 114 in particular, while other aspects of the production method are the same as that of the prior art. Thus, the following provides an explanation of this portion of the production method using FIGS. 25A to 25C.

To begin with, as shown in FIG. 25A, the first sensor yoke unit 111 A and the second sensor yoke unit 111 B connected via connecting portions 116 are stamped out from a single iron plate having an identical (or nearly identical) thickness by press forming. Each connecting portion 116 respectively extends from the four protrusions 113 of the second yoke sensor unit 111B towards four indentations 117 of the first sensor yoke unit 111A, and connects and fixes the first and second sensor yoke units 111A and 111B. At the stage of press forming, relative positions of the first and second sensor yoke units 111A and 111B are determined. The relative positions of the first and second sensor yoke units 111 A and 111 B do not shift as a result of being fixed in position by the connecting portions 116.

Next, as shown in FIG. 25B, the first and second sensor yoke units 111A and 111B stamped out in the stamping process of FIG. 25A are integrally molded with the resin 114. At this time, the gap 115 is formed around the above-mentioned connecting portions 116 connecting the first and second sensor yoke units 111A and 111B by not filling with the resin 114. The amount of the resin 114 used can be decreased by the size of this gap 115. In addition, those portions of the first and second yoke sensor units 111A and 111 B opposing the first or second magnetism collecting yoke 65A and 65B are also not supplied with the resin 114 and left exposed. The relative positions of the first and second sensor yoke units 111 A and 111B are not shifted due to the presence of the connecting portions 116 even after going through this molding step.

Continuing, as shown in FIG. 25C, the connecting portions 116 are separated from the first and second sensor yoke units 111A and 111 B. Here, since the gap 115 is formed around each connecting portion 116, the connecting portions 116 can be separated easily. Since the first and second sensor yoke units 111 A and 111B are molded and fixed in position by the resin 114, the relative positions of the first and second sensor yoke units 111A and 111B do not shift even after the connecting portions 116 have been removed in the separation step as described above.

As has been explained above, the relative positions of the first and second sensor yoke units 111A and 112B determined in the press forming step remain constant and do not shift. Thus, since assembly can be carried out while maintaining the relative positions of the first and second sensor yoke units 111 A and 111B as a result of precisely determining the relative positions thereof by press forming, the sensor yoke 111 can be accurately produced. In addition, positioning work involving fabricating first and second sensor yoke units separately followed by their respective positioning, as well as components required for that positioning work, are not required as in the prior art, thereby making it possible to reduce production cost.

Although the preceding has provided a description of the third embodiment, the present invention is not limited to this embodiment, but rather can be carried out in various forms within a range that does not deviate from the gist thereof. Examples of variations are indicated below.

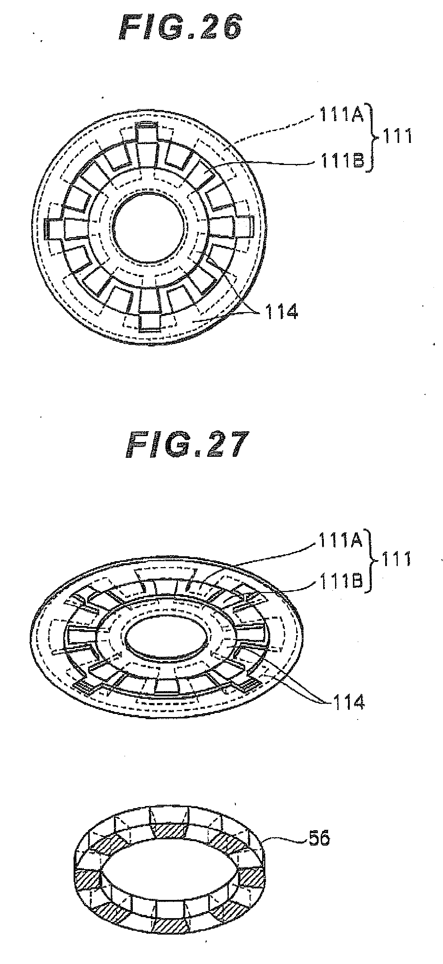

Although the previous embodiment has provided a description of an example of the case of covering the entire surface of the side opposing the permanent magnet 56 with the resin 114, as shown in FIGS. 26 and 27, the portion of the sensor yoke 111 opposing the permanent magnet 56 may be exposed without covering with the resin 114.

As a result thereof, the permanent magnet 56 can be arranged in close proximity to the sensor yoke 111 in comparison with the case of covering the entire surface of the sensor yoke 111 with the resin 114. As a result, coupled with the shape of the resin 114 covering the side of the sensor yoke 111 opposing the magnetism collecting yoke 65, the length of the entire torque detector 110 in the axial direction can be further reduced. In addition, the gap between the sensor yoke 111 and the permanent magnet 56 can also be made smaller. Although this gap composes a magnetic circuit through which passes magnetic flux from the permanent magnet 56, since this magnetic circuit is shortened by reducing the size of the gap, magnetic flux generated by the permanent magnet 56 can be efficiently used in the sensor yoke 111. In the case the gap is composed of a non-magnetic material in particular, effects resulting from reducing the size of the gap are remarkable since the magnetic permeability of such a material is extremely low as compared with a typical magnetic material.

In addition, although a configuration is employed in the present embodiment described above in which four of the connecting portions 116 are provided extending from the protrusions 113 of the second yoke sensor unit 111B to the indentations 117 of the second sensor yoke unit 111 A, as long as both the first and second sensor yoke units 111 A and 111 B are fixed in position until they are molded with the resin 114, the locations where the connecting portions 116 are formed and the number thereof may be any location or number thereof. For example, when the first and second sensor yoke units 111 A and 111B are obtained from a steel plate by punching, the connecting portions 116 may be provided so as to connect all protrusions 113 of the first sensor yoke unit 111 A and the corresponding indentations 117 of the second sensor yoke unit 111 B, or the connecting portions 116 may be provided so as to connect only some of the protrusions 112 of the first sensor yoke unit 111A and the corresponding protrusions 113 corresponding to the second sensor yoke 111 B.

### (4) Fourth Embodiment

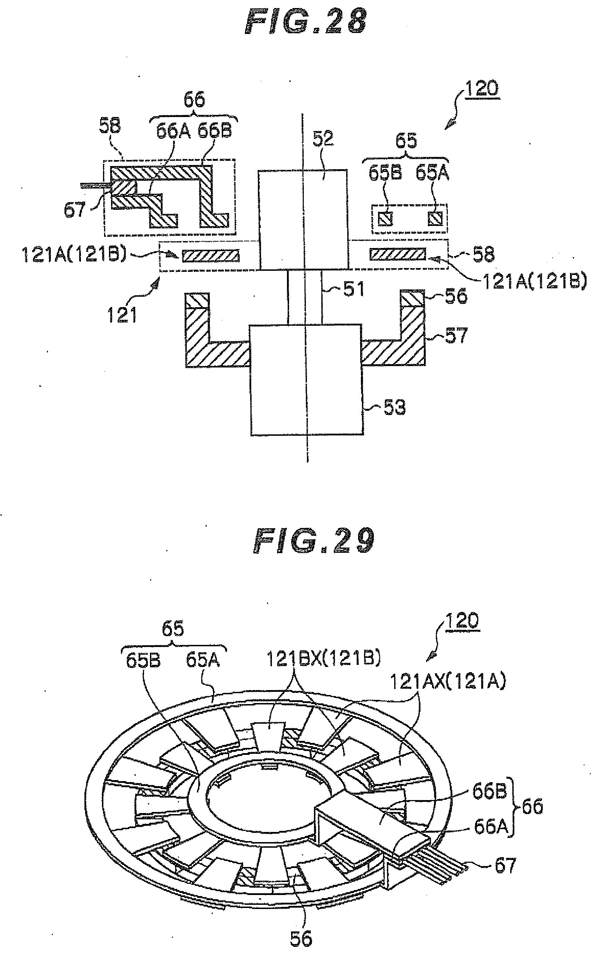

In FIGS. 28 to 32, reference symbol 120 overall indicates a torque detector according to a fourth embodiment. This torque detector 120 is composed in the same manner as the torque detector 50 according to the second embodiment with the exception of having a different configuration for first and second yoke sensor units 121 A and 121 B comprising a sensor yoke 121.

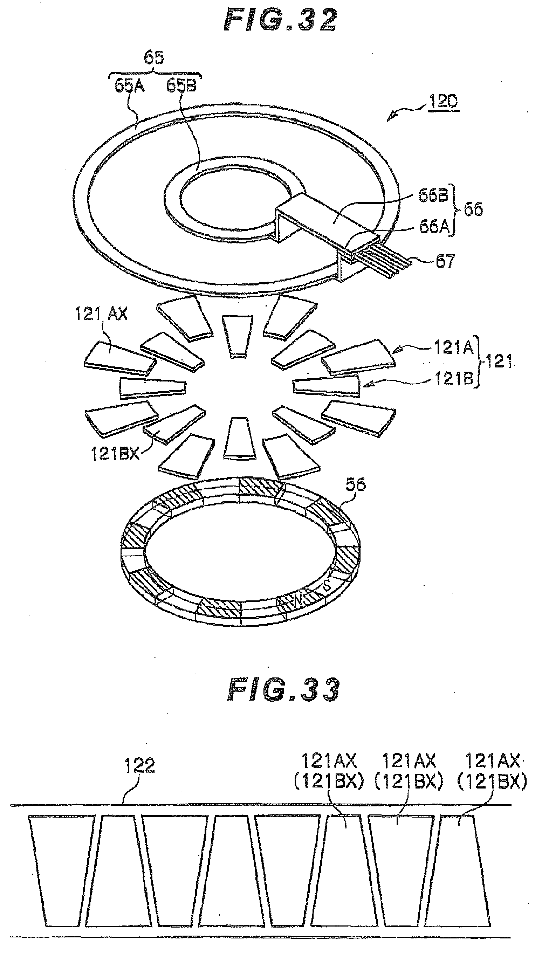

Namely, in the case of the torque detector 120 according to the present embodiment, the first sensor yoke unit 121 A is formed from a plurality of first claw poles 121AX arranged in an annular pattern as is particularly clear from FIG. 32. The first claw poles 121AX are flat members having a trapezoidal shape composed of a magnetic material, and a total of 8 first claw poles 121 AX are arranged with one end on the side having a narrow width facing towards the inside in the radial direction and the other end having a wide width facing towards the outside in the radial direction. In addition, the second sensor yoke unit 121 B is formed from a plurality of second claw poles 121BX arranged in an annular pattern. The second claw poles 121BX are flat members having a trapezoidal shape composed of a magnetic material, and a total of 8 second claw poles 121BX are arranged with one end on the side having a narrow width facing towards the inside in the radial direction and the other end having a wide width facing towards the outside in the radial direction, the second claw poles 121BX being alternately arranged with the first claw poles 121AX. The number of these first and second claw poles 121AX and 121BX is respectively selected to be equal to half the number of poles of the permanent magnet 56.

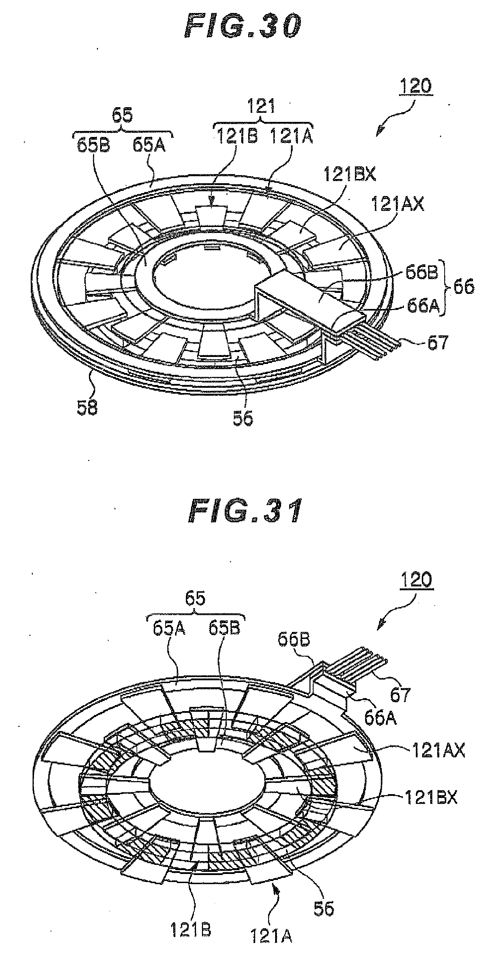

As shown in FIG. 30, all of the first and second claw poles 121AX and 121 BX are integrated by being molded with the resin 58. Since the first and second claw poles 121AX and 121BX are arranged within the same or nearly the same plane, they can be formed to have a small thickness and can also be integrated with a smaller amount of the resin 58, thereby making it possible to reduce costs.

In addition, the first and second claw poles 121AX and 121BX are formed into a flat shape having the same or nearly the same thickness. In this manner, since the first and second claw poles 121AX and 121BX are formed into a flat shape, the length of the first and second claw poles 121AX and 121BX in the axial direction can be shortened, thereby enabling a corresponding reduction in the overall size of the device.

Furthermore, a method of producing the first and second claw poles 121 AX and 121 BX of the present embodiment is shown in FIG. 33. The first and second claw poles 121 AX and 121 BX are respectively fabricated by stamping from a material 122 in the form of a flat plate in sequentially and alternately different orientations. Although the claw poles are produced from the soft magnetic material described in Patent Document 4 by bending the claw pole portions since it is a ring-shaped member having claw poles on the inside thereof, the inside of the material ends up being discarded. In the present embodiment, since there is no circular ring that ends up being discarded, the usage efficiency the material 122 can be dramatically improved.

The magnetism collecting yoke 65 is fixed to a static portion not shown so that the first magnetism collecting yoke unit 65A respectively opposes the wide side of each first claw pole 121AX composing the first sensor yoke unit 121 A, and the second magnetism collecting yoke unit 65B respectively opposes the narrow side of each second claw pole 121BX composing the second sensor yoke unit 121 B. In this manner, as a result of the magnetism collecting yoke 65 being arranged over the entire circumference of the first and second sensor yoke units 121 A and 121 B, the occurrence of measurement error attributable to fluctuations in the relative angle between the sensor yoke 121 and the magnetism collecting yoke 65 can be prevented.

As has been described above, in the torque detector 120 according to the present embodiment, since the first and second sensor yoke units 121A and 121B (and each of the first and second claw poles 121AX and 121BX) are in the form of flat plates and do not have a ring-shaped site, material efficiency can be dramatically improved, thereby making it possible to improve economy. Moreover, since length in the axial direction can be shortened, the torque detector 120 can be constructed to be more compact.

In addition, in the torque detector 1 according to the present embodiment, as a result of configuring with a first sensor yoke unit 121A, composed of a plurality of first claw poles 121AX arranged in an annular pattern, and a second sensor yoke unit 121 B, composed of a plurality of second claw poles 121 BX arranged in an annular pattern so as to alternate with the first claw poles 121 A, the first and second claw poles 121AX and 121BX can be fabricated by stamping from the flat material 122 in sequentially and alternately different orientations as shown in FIG. 33. As a result, since the sensor yoke 121 does not have a circular ring portion of which the inside thereof is wasted, material efficiency can be dramatically improved. This effect of reducing costs is particularly large in the case of using an expensive metal having a high nickel content for the material.

Furthermore, although the present embodiment has provided a description of the case of forming the first and second claw poles 121AX and 121BX to have a trapezoidal shape, they may also be formed to have a triangular or rectangular shape.

In addition, although the present embodiment has provided a description of the case of half the number of poles of the permanent magnet 56 being equal to the number of the first and second claw poles 121AX and 121BX, these numbers may also be different.

Moreover, although the present embodiment has provided a description of the case of fabricating all of the first and second claw poles 121 AX and 121 BX individually, a configuration may also be employed in which portions of the first or second claw poles 121AX and 121 BX are integrally connected. More specifically, a configuration may be employed in which two or four each, for example, of the first and second claw poles 121AX and 121 BX are integrally connected.

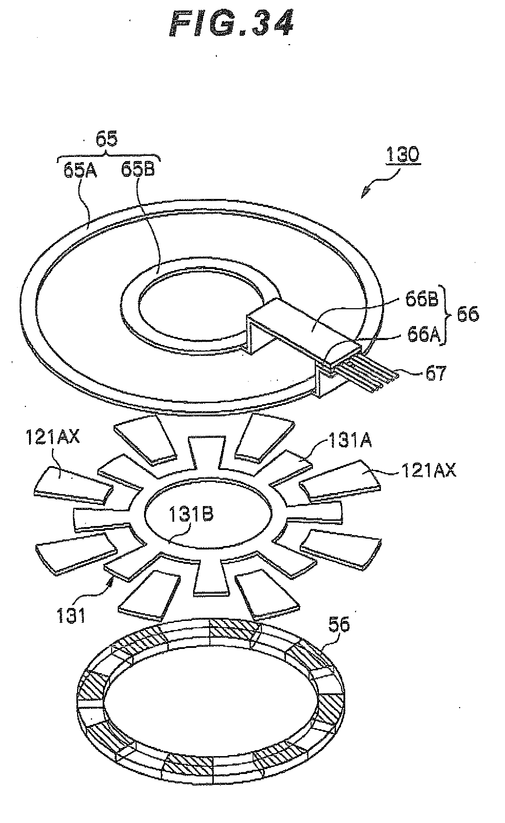

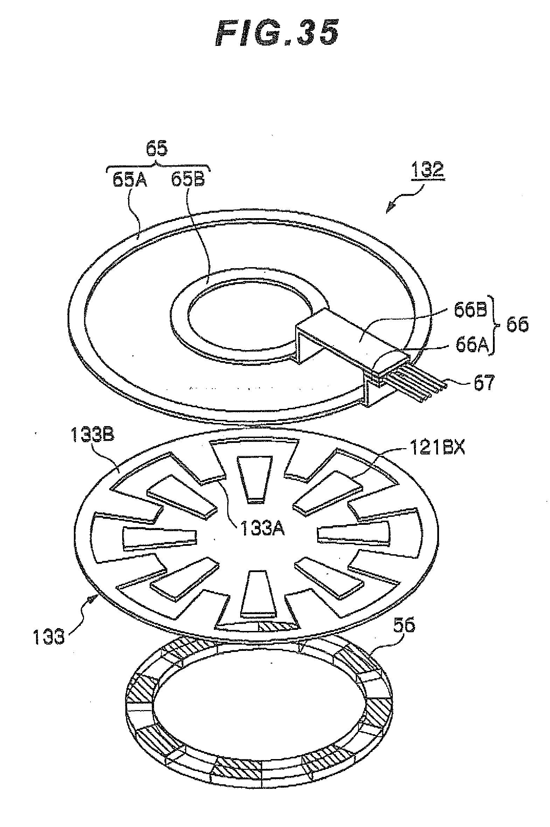

In addition, a second sensor yoke 131 may employ a configuration in which protrusions 131 A of nearly the same shape as the second claw poles 121BX are formed protruding at fixed intervals from the periphery of a ring-shaped connecting portion 131 B (or in other words, the narrow side of each second claw pole 121 BX is integrally connected with the connecting portion 131 B) as shown in FIG. 34, or a first sensor yoke 133 may employ a configuration in which protrusions 133A of nearly the same shape as the first claw poles 121AX are formed protruding at fixed intervals from the inside of a ring-shaped connecting portion 133B (or in other words, the wide side of each first claw pole 121 AX is integrally connected with the connecting portion 133B) as shown in FIG. 35. As a result of employing such a configuration, the mechanical strength of the sensor yoke can be increased while also facilitating ease of assembly.

### (5) Fifth Embodiment

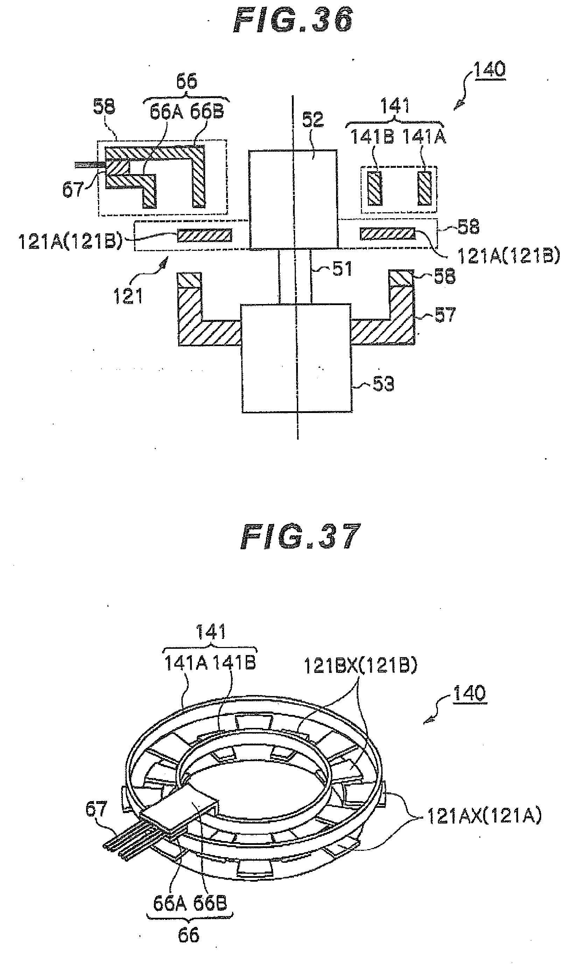

FIGS. 36 to 38, which use the same reference symbols for those portions corresponding to FIGS. 28 to 32, show a torque detector 140 according to a fifth embodiment. This torque detector 140 is composed in the same manner as the torque detector 120 (FIGS. 28 to 32) according to the fourth embodiment with the exception having a different configuration for first and second magnetism collecting yoke units 141A and 141B composing a magnetism collecting yoke 141.

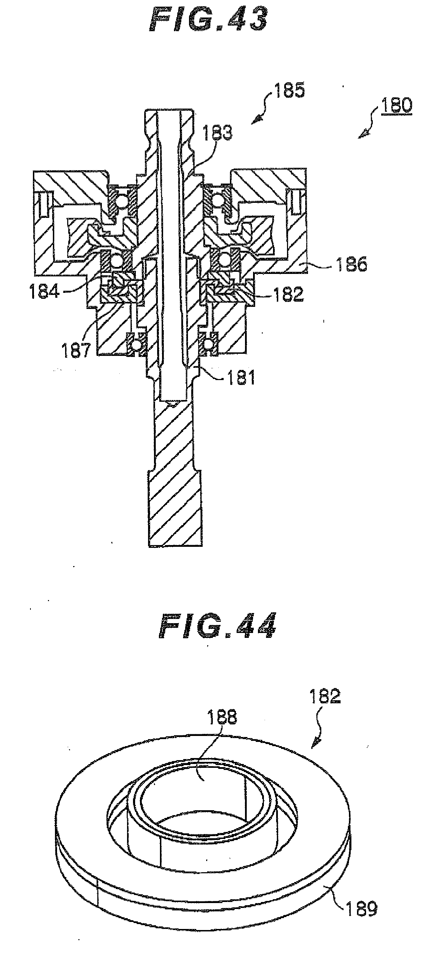

Namely, in the case of the torque detector 140 according to the present embodiment, the first and second magnetism collecting yoke units 141A and 141 B are formed to have a cylindrical shape overall. The first magnetism collecting yoke unit 141A is fixed to a stationary member not shown (such as a housing (indicated with reference symbol 186 in FIG. 43)) so that a portion thereof, such as an end surface thereof, faces the outer periphery of the first sensor yoke unit 121A over the entire circumferential direction, and the second magnetism collecting yoke unit 25B is fixed to the stationary member so that a portion thereof, such as an end surface thereof, faces the inside of the second sensor yoke unit 121B over the entire circumferential direction.

In this manner, as a result of arranging the magnetism collecting yoke 141 over the entire circumference of the first and second sensor yoke units 121A and 121B in the torque detector 140, the occurrence of measurement error attributable to fluctuations in the relative angle between the sensor yoke 121 and the magnetism collecting yoke 141 can be prevented.

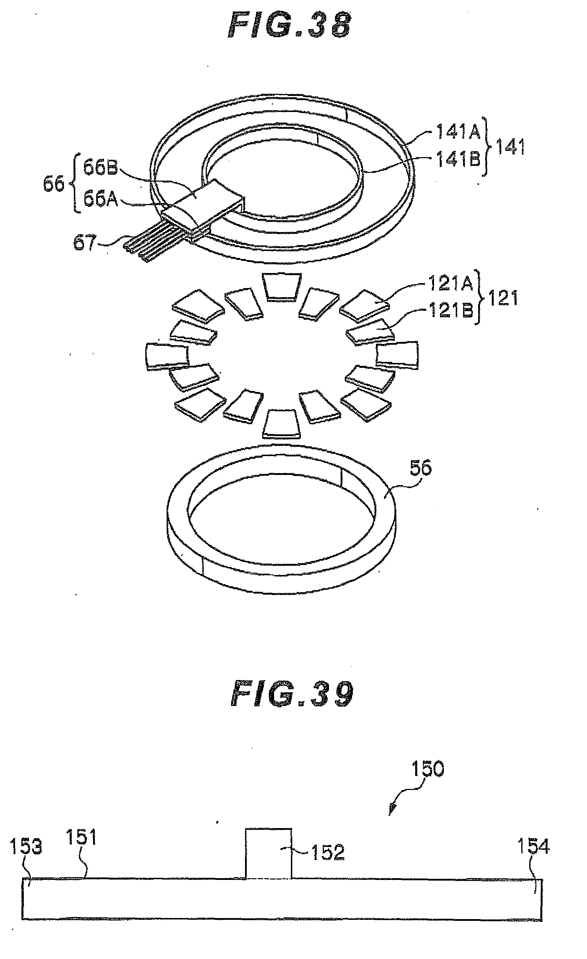

Here, the first and second magnetism collecting yoke units 141A and 141B are fabricated by press forming a plate 150 (such as permalloy having a high content of Ni) as shown in FIG. 39. The plate 150 is provided with a long, narrow band portion 151 and a rectangular protrusion 152, for example, protruding from one side of the band portion 151. In the following description, one side of the band portion 151 is referred to as band end 153, while the other side is referred to as band end 154, with the protrusion 152 located there between. In this manner, costs can be reduced by press forming into the shape of a plate.

The band portion 151 of this plate 150 is bent into an annular shape and the band end 153 and the band end 154 are joined end to end. Moreover, the magnetic flux concentrating portion constituent units 66A and 66B are formed by bending the protrusion 152 to the outside.

Furthermore, the first and second magnetism collecting yoke units 141A and 141 B along with the magnetic flux detector 67 are integrated by molding with the resin 58 as shown in FIG. 36. However, the present embodiment is not limited thereto, and for example, only the first and second magnetism collecting yoke units 65A and 65B may be molded with the resin 58, while the magnetic flux detector 67 may be inserted thereafter.

In the torque detector 140 according to the present embodiment configured in this manner, since the dimension in the axial direction can be decreased, the performance of the EPS can be improved such as by allowing the use of an adequate EA stroke for absorbing an impact during a collision.

In addition, since the first and second magnetism collecting yoke units 141 A and 141 B are fabricated by bending the band portion 151 into a cylindrical shape, material yield can be improved more than initially stamping into the shape of a ring, thereby making it possible to realize lower costs. This effect is particularly large when using an expensive material having a high nickel content such as permalloy.

Moreover, in the torque detector 140 according to the present embodiment, since the first and second sensor yoke units 121 A and 121 B are in the form of flat plates and do not have a circular ring-shaped site, material efficiency can be improved thereby making it possible to improve economy. Moreover, since length in the axial direction can be shortened, the torque detector 140 can be constructed to be more compact.

Furthermore, although the present embodiment has provided a description of the case of separating the first claw poles 121AX composing the first sensor yoke unit 121 A and the second claw poles 121 BX composing the second sensor yoke unit 121 B, a configuration may also be employed in which some of the first claw poles 121AX and the second claw poles 121 BX (such as four) are integrally connected.

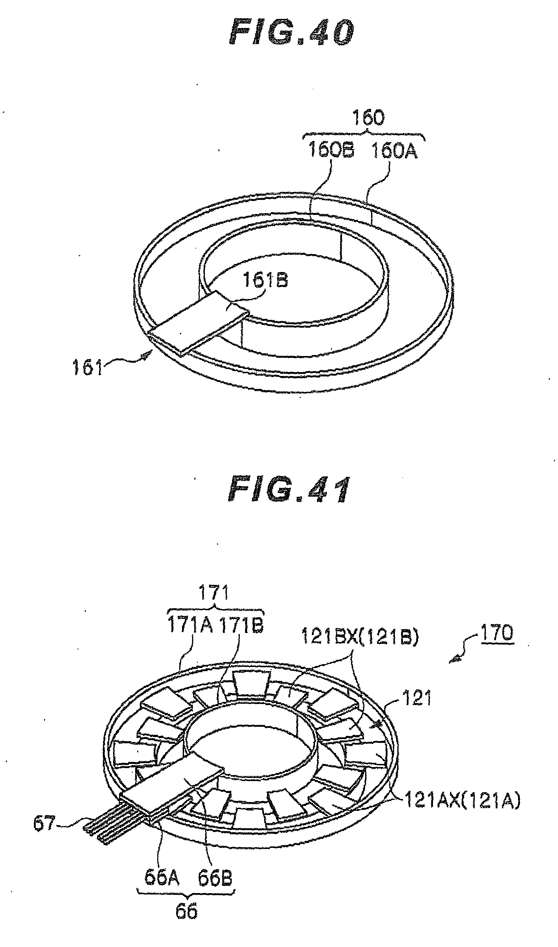

In addition, although the present embodiment has provided a description of the case in which magnetic flux concentrating portion constituent units 66A and 66B are provided in both the first and second magnetism collecting yoke units 141 A and 141 B, as shown in FIG. 40, for example, a magnetic flux concentrating portion constituent unit 161 B may be formed only on a second magnetism collecting yoke unit 160B of first and second magnetism collecting yoke units 160A and 160B composing a magnetism collecting yoke 160, a magnetic flux concentrating portion 161 may be composed with this magnetic flux concentrating portion constituent unit 161 B and a portion of the end surface of the first magnetism collecting yoke unit 160A opposing the magnetic flux concentrating portion constituent unit 161 B.

In the case of employing such a configuration, the dimension in the radial direction of the portion on which a magnetic detection element is arranged by overlapping the above-mentioned band end 153 and the band end 154 shown in FIG. 39. As a result, since magnetic flux concentrating portion constituent units of the first magnetism collecting yoke unit 160A can be omitted, material can be used effectively. In addition, since a step for bending magnetic flux concentrating portion constituent units of the first magnetism collecting yoke unit 160A can be omitted from the production process of the magnetism collecting yoke 160, the production process can be simplified. In addition, since the plasticizing process, which causes poor magnetic characteristics, can be reduced by one step, exacerbation of magnetic characteristics can be prevented.

Furthermore, whether magnetic flux concentrating portion constituent units are provided on only one of either of the first and second magnetism collecting yoke units as in the present embodiment or on both can be suitably selected corresponding to the positioning ease of the magnetic detection element 67.

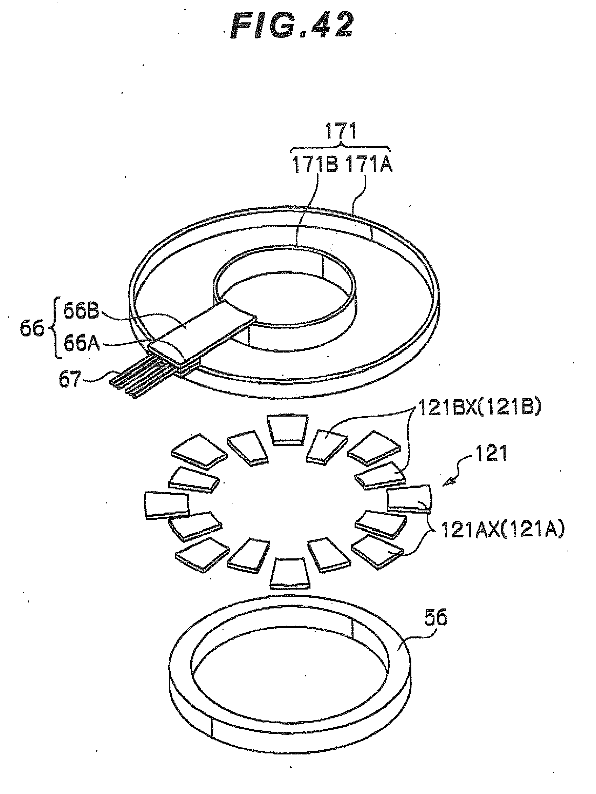

Next, an explanation is provided of another example of the configuration of the present invention with reference to FIGS. 41 and 42. Furthermore, the same reference symbols are used to indicate those portions corresponding to FIGS. 36 and 38, and explanations thereof are omitted.

A torque detector 170 shown in FIGS. 41 and 42 employs a configuration in which, together with a second magnetism collecting yoke unit 171 B of first and second magnetism collecting yoke units 171A and 171B composing a magnetism collecting yoke 171 being formed smaller than the inner diameter of the second sensor yoke unit 121B, the first magnetism collecting yoke unit 171A is formed larger than the outer diameter of the first sensor yoke unit 121 A, and the first and second sensor yoke units 121A and 121B are interposed in the radial direction between the first and second magnetism collecting yoke units 171A and 171B. The first and second sensor yoke units 121A and 121 B are positioned roughly in the center of the dimension in the axial direction of the magnetism collecting yoke 171. As a result, in comparison with the configuration example shown in FIGS. 36 to 38, effects of axial fluctuations between the sensor yoke 121 and the magnetism collecting yoke 171 can be decreased. In addition, the dimension in the axial direction of the torque detector can be further reduced.

Next, an explanation is provided of an EPS system 180 using the torque detector 170 previously described with respect to FIGS. 41 and 42 with reference to FIG. 43.

In this EPS system 180, a sensor yoke assembly 182 is fixed to an input shaft 181 on the side of a steering wheel by press-fitting and the like, while a magnet assembly 184 is fixed to an output shaft 183 on the side of an intermission by press-fitting and the like. A shaft assembly 185 composed of the input shaft 181 and the output shaft 183 is configured by inserting into the inside of a magnetism collecting yoke assembly 187 fixed to a housing 186.

Here, as shown in FIG. 44, the sensor yoke assembly 182 is provided with the above-mentioned sensor yoke 121 (FIGS. 41 and 42) and a collar 188 for fixing to the input shaft 181 by press-fitting, and these are integrally fixed in position by molding with a synthetic resin 189.

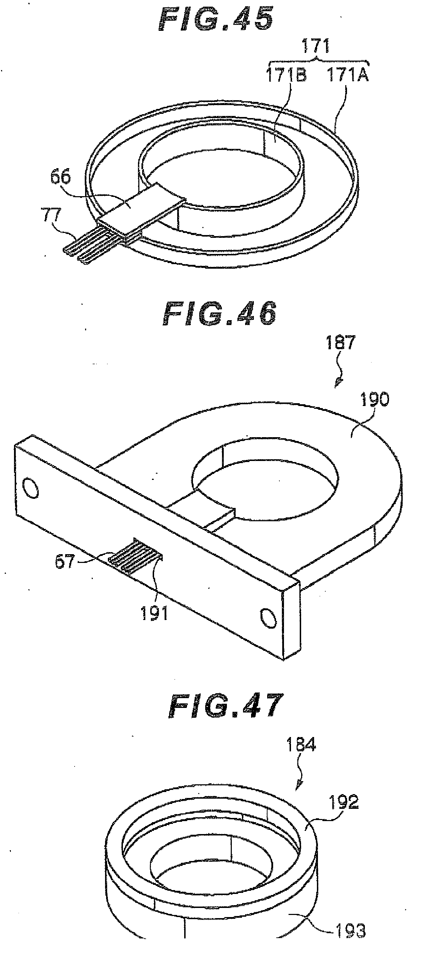

Since it is necessary for the sensor yoke 121 to oppose the magnetism collecting yoke 171 in the radial direction and oppose the magnet assembly 184 in the axial direction, the entire sensor yoke 121 is not molded, but rather the opposing surfaces thereof are left exposed.
The magnetism collecting yoke 171 is shown in FIG. 45, while the magnetism collecting yoke assembly 187 is shown in FIG. 46. The magnetism collecting yoke assembly 187 is molded with a pair of magnetism collecting yokes 171 using a synthetic resin 190 to fix them in position. However, an opening 191 is provided for inserting the magnetic flux detector 67 so as to enable the magnetic flux detector 67 to be inserted into the magnetic flux concentrating portion 66.

The magnet assembly 184 is shown in FIG. 47. The magnet assembly 184 is composed of a ring magnet 192 having a number of poles corresponding to the sensor yoke 121 (16 in the present embodiment), and a magnet housing 193 that fixes the ring magnet 192. Although the ring magnet 192 may normally be a sintered magnet, it may be integrally formed with the magnet housing 193 using a bonded magnet. In addition, the magnet housing 193 can also be used as a magnet back yoke by being composed of a magnetic material.

Although the number of poles of the ring magnet 192 is 16 in the present embodiment, the number of poles may be suitably selected based on the relationship between the detected angle (relative angle between the sensor yoke 121 and the ring magnet 192) and linearity. More specifically, although the number of poles of the ring magnet is preferably 16 in the case the detected angle is about ±5°, the number of poles of the ring magnet may be 24 in the case the absolute value of the detected angle is about 3°.

The size of an electric power steering device can be reduced by applying the torque detector 170 to an EPS system in this manner. Namely, the performance of the EPS system can be improved by allowing the obtaining of advantages such as by allowing the use of an adequate EA stroke for absorbing an impact during a collision.

The present invention can be applied to not only a torque detector of an automobile electric power steering device, but also to a wide range of various types of torque detectors.

## Claims

1. A torque detector, which is provided with a first shaft body; a second shaft body; a connecting shaft for connecting the first shaft body and the second shaft body; a permanent magnet fixed to the first shaft body; a plurality of magnetic bodies and auxiliary magnetic bodies, fixed to the second shaft body and arranged within the magnetic field of the permanent magnet, for forming a magnetic circuit of the permanent magnet; and a magnetic flux detector for detecting magnetic flux by induction of the magnetic bodies and the auxiliary magnetic bodies, and which detects torque based on a detection output of the magnetic flux detector when the torque has acted on the first shaft body or the second shaft body, wherein
the permanent magnet is formed into the shape of a flat annular body surrounding the connecting shaft or the first shaft body, and has different magnetic poles alternately magnetized in the axial direction, and opposes the magnetic bodies and the auxiliary magnetic bodies in the axial direction of the first shaft body.

2. The torque detector according to claim 1, wherein the plurality of magnetic bodies are formed into an annular shape and arranged in one of regions on both sides centering about the permanent magnet, and face the permanent magnet.

3. The torque detector according to claim 1 or 2, wherein the plurality of auxiliary magnetic bodies are formed into an annular shape, are magnetically coupled to the plurality of magnetic bodies, respectively induce magnetic flux from the magnetic bodies, and have a magnetic flux concentrating portion for collecting the induced magnetic flux, while the magnetic flux detector detects magnetic flux that has collected in the magnetic flux concentrating portion.

4. The torque detector according to claim 3, wherein the plurality of auxiliary magnetic bodies are arranged in one of regions on both sides centering on the plurality of magnetic bodies and face the plurality of magnetic bodies.

5. The torque detector according to claim 3 or 4, wherein the magnetic flux concentrating portion of the plurality of auxiliary magnetic bodies is formed to match the size of the magnetic flux detector.

6. A torque detector, which is provided with a first shaft body; a second shaft body; a connecting shaft for connecting the first shaft body and the second shaft body; a permanent magnet fixed to the first shaft body; a plurality of magnetic bodies, fixed to the second shaft body and arranged within the magnetic field of the permanent magnet, for forming a magnetic circuit of the permanent magnet; a plurality of auxiliary magnetic bodies arranged in proximity to the plurality of magnetic bodies; and a magnetic flux detector for detecting magnetic flux by induction of the magnetic bodies and the auxiliary magnetic bodies, and which detects torque based on a detection output of the magnetic flux detector when the torque has acted on the first shaft body or the second shaft body, wherein
the permanent magnet is formed into the shape of a flat annular body surrounding the connecting shaft or the first shaft body, and has different magnetic poles alternately magnetized in the axial direction, and opposes the magnetic bodies in the axial direction of the first shaft body.

7. The torque detector according to claim 6, wherein the plurality of magnetic bodies are formed into an annular shape, and arranged in one of regions on both sides centering about the permanent magnet, and face the permanent magnet.

8. The torque detector according to claim 6 or 7, wherein the plurality of auxiliary magnetic bodies are formed into an annular shape, are magnetically coupled to the plurality of magnetic bodies, respectively induce magnetic flux from the magnetic bodies, and have a magnetic flux concentrating portion for collecting the induced magnetic flux, while the magnetic flux detector detects magnetic flux that has collected in the magnetic flux concentrating portion.

9. The torque detector according to claim 8, wherein the plurality of auxiliary magnetic bodies are arranged in one of regions on both sides centering on the plurality of magnetic bodies and face the plurality of magnetic bodies.

10. The torque detector according to claim 8 or 9, wherein the magnetic flux concentrating portion of the plurality of auxiliary magnetic bodies is formed to match the size of the magnetic flux detector.

11. A torque detector, which has a first shaft and a second shaft coaxially connected through a connecting shaft; a ring-shaped permanent magnet fixed to the second shaft and magnetized in multiple poles along a circumferential direction; a sensor yoke, fixed to the first shaft, for forming a magnetic circuit together with the permanent magnet; a magnetism collecting yoke, arranged on the opposite side in the axial direction of the sensor yoke to the side of the permanent magnet, for forming a magnetic circuit together with the permanent magnet and the sensor yoke; and a magnetic flux detector for detecting magnetic flux induced by the sensor yoke and the magnetism collecting yoke, and which detects torque applied to either one of the first shaft and the second shaft based on the output of the magnetic flux detector; wherein
the yoke sensor is formed into the shape of a flat plate and arranged so as to face one side of the permanent magnet in the axial direction.

12. The torque detector according to claim 11, wherein the magnetism collecting yoke is arranged so as to continuously oppose the sensor yoke over the entire circumferential direction.

13. The torque detector according to claim 11 or 12, wherein the magnetism collecting yoke is provided with a magnetic flux concentrating portion to concentrate magnetic flux passing through the magnetism collecting yoke.

14. The torque detector according to any of claims 11 to 13, wherein the sensor yoke is formed of a pair of first and second sensor yoke constituent members, and the first and second sensor yoke constituent members are arranged in the same or substantially the same plane.

15. The torque detector according to any of claims 11 to 14, wherein the thicknesses of the first and second sensor yoke constituent members are the same or substantially the same.

16. The torque detector according to any of claims 11 to 15, wherein the first and second sensor yoke constituent members are in the shape of rings having mutually different diameters and provided with one or a plurality of protrusions respectively protruding in the radial direction on the side on which one of the second and first sensor yoke constituent members is present, and the number of the protrusions provided on the first or second sensor yoke constituent member is half the number of poles of the permanent magnet.

17. The torque detector according to any of claims 11 to 16, wherein two of the magnetic flux detectors are provided.

18. The torque detector according to any of claims 11 to 16, wherein three or more of the magnetic flux detectors are provided.

19. An electric power steering device that generates auxiliary steering torque from an electric motor corresponding to steering torque applied to a steering wheel, and transmits the auxiliary steering torque to an output shaft of a steering mechanism after decelerating with a reduction gear,
the electric power steering device comprising the torque detector according to any of claims 11 to 18.
